# EUROPÄISCHE PATENTSCHRIFT

(11) **EP 3 296 031 B1**
(45) Veröffentlichungstag und Bekanntmachung des Hinweises auf die Patenterteilung: **27.10.2021**
(21) Anmeldenummer: 17190823.9
(22) Anmeldetag: 13.09.2017
(51) Int. Cl.: B08B 9/46, A23L 3/02, A23L 3/00, G01N 21/90, B07C 5/342, C23G 5/00, C12H 1/18

(54) **VERFAHREN UND VORRICHTUNG ZUR BEHANDLUNG VON OBJEKTEN, MIT ÜBERWACHUNG DER OBJEKTE**
METHOD AND DEVICE FOR TREATING OBJECTS, WITH MONITORING OF THE OBJECTS
PROCÉDÉ ET DISPOSITIF DE TRAITEMENT D'OBJETS DOTÉS DU DISPOSITIF DE SURVEILLANCE DES OBJETS

(30) Priorität: 19.09.2016 AT 508372016
(43) Veröffentlichungstag der Anmeldung: 21.03.2018
(73) Patentinhaber: Red Bull GmbH, 5330 Fuschl am See (AT)
(72) Erfinder: DEMOULIN, Gunnar, 5026 Salzburg (AT); RINDERER, Christian, 5330 Fuschl am See (AT); CONCIN, Roland, 5330 Fuschl am See (AT)
(74) Vertreter: Burger, Hannes

(56) Entgegenhaltungen:
- EP-A1- 2 899 535
- EP-A2- 1 862 307
- WO-A1-94/19968
- WO-A1-2015/065489
- WO-A2-2006/101944
- DE-A1-102012 015 579
- US-A- 3 769 932
- US-A- 5 245 399
- US-A1- 2002 073 652
- US-A1- 2003 024 554

## Beschreibung

Die Erfindung betrifft ein Verfahren und eine Pasteurisierungsanlage zur Behandlung und Qualitätsüberwachung von einen metallischen Werkstoff aufweisenden Objekten, gemäß dem Wortlaut der Ansprüche.

Das Dokument WO-A1-2015/065489 offenbart ein Verfahren, bzw. eine Pasteurisierungsanlage, zur Behandlung und Überwachung von einen metallischen Werkstoff aufweisenden Objekten gemäß dem Oberbegriff des Anspruchs 1, bzw. 21.

In Gegenständen bzw. Gütern werden häufig metallische Werkstoffe aufgrund ihrer Eigenschaften eingesetzt, wobei die entsprechenden Objekte bzw. Gegenstände gänzlich aus metallischen Werkstoffen, oder aus einer Kombination aus metallischen und nichtmetallischen Werkstoffen bestehen können. Als ein Beispiel hierfür können Behältnisse umfassend oder bestehend aus einem metallischen Werkstoff genannt werden.

Derartige Behältnisse können zum einen aufgrund der grundsätzlichen Festigkeit bzw. Formstabilität von metallischen Werkstoffen wie etwa Aluminium, sehr dünnwandig ausgeführt sein. Des Weiteren eignen sich Behältnisse aus metallischen Werkstoffen unter anderem zur Aufbewahrung von empfindlichen Inhalten, wie etwa Lebensmitteln. Von Vorteil sind hierbei auch die hervorragenden Gasbarriere-Eigenschaften bzw. die sehr geringe Durchlässigkeit für Gase, wie zum Beispiel von Aluminium bzw. Aluminiumwerkstoffen. Dadurch kann ein Verderben der Lebensmittel langfristig hintangehalten werden, und kann eine lange Haltbarkeit der in solchen Behältnissen abgefüllten Lebensmittel erzielt werden.

Häufig werden Gegenstände bzw. Objekte umfassend einen metallischen Werkstoff mit einer Behandlungs- bzw. Prozessflüssigkeit behandelt. Dies kann unter anderem während der Herstellung der Objekte selbst erforderlich sein, etwa zum Zwecke einer Reinigung oder Temperierung, insbesondere Abkühlung der Objekte nach einer Formgebung, etc.. Andererseits kann eine derartige Behandlung mit einer Behandlungsflüssigkeit auch zu anderen Zwecken erfolgen. Als Beispiel hierfür kann eine Behandlung von metallischen Werkstoff aufweisenden Behältnissen mit einer erhitzten Prozessflüssigkeit zwecks Pasteurisierung eines in den Behältnissen beinhalteten Lebensmittels genannt werden. Eine Behandlung eines einen metallischen Werkstoff aufweisenden Objektes umfasst nicht das Aufbringen einer Beschichtung auf den metallischen Werkstoff, etwa im Sinne einer Lackierung oder dergleichen.

Bei einer Behandlung eines Objektes, welches einen nicht beschichteten, metallischen Werkstoff aufweist, kann es grundsätzlich im Zuge einer fortdauernden bzw. andauernden Behandlung mit Behandlungsflüssigkeit im Laufe der Zeit zu einer Veränderung des metallischen Werkstoffes kommen. Derartige Veränderungen können chemischer Natur sein, beispielsweise durch oberflächliche Oxidationsprozesse bedingt. Ebenso können chemisch-physikalische Veränderungen der Oberflächenstruktur, etwa von oberflächennahen Schichten der metallischen Werkstoffe, durch solche Behandlungen mit Flüssigkeiten hervorgerufen werden. Solche durch eine Behandlungsflüssigkeit hervorgerufenen, oberflächlichen Veränderungen eines metallischen Werkstoffes können im Besonderen bei Behandlungsverfahren auftreten, bei welchen ein und dieselbe Behandlungsflüssigkeit zur wiederholten Behandlung der Objekte eingesetzt wird. Dies vor allem deshalb, da eine wiederholte Behandlung von Objekten mit derselben Behandlungsflüssigkeit, zu Veränderungen der chemischen Zusammensetzung der Behandlungsflüssigkeit führen kann. Eine derart, chemisch veränderte Behandlungsflüssigkeit kann im Zuge einer Behandlung wiederum zu oberflächennahen Veränderungen eines metallischen Werkstoffes, und damit allenfalls zu Verfärbungen des metallischen Werkstoffes führen.

Im Falle von metallischen Werkstoffen geht mit einer Veränderung der Zusammensetzung oder einer Veränderung der Oberflächenstruktur eines metallischen Werkstoffes häufig eine optisch wahrnehmbare bzw. erkennbare Veränderung der Farbe des Werkstoffes einher. Dies oftmals in Abhängigkeit von der Art der Veränderung eines metallischen Werkstoffes, welche wiederum häufig von den Eigenschaften und der Zusammensetzung der Behandlungsflüssigkeit abhängig ist. Im Falle einer Behandlung von einem nicht beschichteten Aluminiumwerkstoff aufweisenden Objekten mit einer wässrigen Behandlungsflüssigkeit, kann zum Beispiel eine sogenannte Brunnenwasserschwärze auftreten. Derartige Behandlungen mit einer erhitzten, wässrigen Behandlungsflüssigkeit werden häufig zum Zwecke einer Pasteurisierung von in Aluminiumbehältnissen abgefüllten Lebensmitteln durchgeführt.

Zwar bringen solche Veränderungen nicht immer grundsätzlich eine Beeinträchtigung der Funktion des Objektes bzw. metallischen Werkstoffes umfassenden Gegenstandes bzw. Objekts mit sich, da es sich häufig lediglich um oberflächennahe Veränderungen handelt. Oftmals werden jedoch wahrnehmbare Verfärbungen von Objekten bzw. Produkten von Konsumenten als qualitätsmindernd bzw. sogar als mögliche Produktfehler wahrgenommen.

Dadurch ist die konsumentenseitige Akzeptanz für solche Objekte oftmals nicht mehr gegeben, und kann ein entsprechendes, beispielsweise verfärbtes Objekt bzw. Produkt nicht mehr oder nur mit Einschränkungen kommerziell nutzbar sein.

Hierbei ist es vor allem in kommerzieller Hinsicht insbesondere nachteilig, wenn solche Veränderungen, beispielsweise Verfärbungen, während einer Behandlung nicht, oder erst spät nach deren eigentlichen Eintreten erkannt werden. In der modernen Massenproduktion ist häufig vorgesehen, dass hohe Chargenmengen in einem Durchlaufverfahren produziert werden. Wird eine Veränderung während der Verarbeitung nicht oder spät erkannt, kann es vorkommen, dass eine ganze Charge an Objekten mängelbelastet ist. Aus diesem Grund besteht ein Bedarf nach Mitteln zur Überwachung von Produktionsprozessen umfassend eine Behandlung von metallische Werkstoffe aufweisenden Objekten mit einer Flüssigkeit, insbesondere einer wässrigen Behandlungsflüssigkeit.

Aufgabe der vorliegenden Erfindung war es, diesem Bedarf nachzukommen, und ein Verfahren und eine Vorrichtung zur Verfügung zu stellen, bei welchen eine möglichst frühzeitige Erkennung von Veränderungen von Objekten, aufweisend einen metallischen Werkstoff, im Zuge einer Behandlung mit Behandlungsflüssigkeit ermöglicht ist.

Diese Aufgabe wird durch ein Verfahren gemäß Anspruch 1 und eine Pasteurisierungsanlage gemäß Anspruch 21 gelöst.

Das erfindungsgemäße Verfahren zur Behandlung und Überwachung bzw. Qualitätsüberwachung von einem metallischen Werkstoff aufweisenden Objekten umfasst zumindest einen Verfahrensschritt zur Behandlung der einen metallischen Werkstoff aufweisenden Objekte mit einer Behandlungsflüssigkeit, insbesondere mit einer wässrigen Behandlungsflüssigkeit, in einer Behandlungszone oder in mehreren Behandlungszonen. Nach dem Behandeln wird die Behandlungsflüssigkeit von den behandelten Objekten entweder aktiv entfernt, oder erfolgt eine passive Abtrocknung der Behandlungsflüssigkeit von den behandelten Objekten. Zur laufenden bzw. fortwährenden Überwachung nach der Behandlung der Objekte wird wenigstens ein, einen metallischen Werkstoff aufweisender Teilabschnitt von jeweils zumindest einem mit Behandlungsflüssigkeit behandelten Objekt mittels einer farberfassenden Erfassungsvorrichtung optisch erfasst.

Die optisch erfassten Daten bzw. Farbdaten des wenigstens einen Teilabschnitts werden zur Erkennung von Verfärbungen mittels einer Auswertevorrichtung farberkennungstechnisch unter Bildung eines Farbkennwertes oder mehrerer Farbkennwerte ausgewertet. Diese Auswertung kann auf Basis eines Farbmodelles erfolgen.

Unter einem metallischen Werkstoff werden insbesondere Metalle und Metalllegierungen verstanden. Die Behandlung mit der Behandlungsflüssigkeit umfasst nicht eine Beschichtung des metallischen Werkstoffes. Der metallische Werkstoff ist also nicht beschichtet, und wird im Zuge der Behandlung auch nicht beschichtet. Bei den einen metallischen Werkstoff aufweisenden Objekten kann es sich um Metallbehältnisse oder Verschlusskappen für Behältnisse aus Glas oder Kunststoff, beispielsweise um Schraubverschlüsse aus Metall und dergleichen handeln.

Die Behandlungsflüssigkeit kann im Speziellen zur Behandlung der Objekte wiederverwendet, also zur wiederholten Behandlung der Objekte in der oder den Behandlungszone(n) verwendet werden. Hierzu kann zum Beispiel vorgesehen sein, dass die Behandlungsflüssigkeit in einem Umlaufkreislauf geführt, und der oder den Behandlungszone(n) wiederholt zugeführt wird.

Durch die angegebenen Maßnahmen kann ein Verfahren bereitgestellt werden, welches vor allem eine möglichst zeitnahe Erkennung von Mängeln durch Erfassung und farberkennungstechnische Auswertung von Verfärbungen von metallischen Werkstoffen, noch im laufenden Betrieb der Behandlung der Objekte mit Behandlungsflüssigkeit erlaubt. Dadurch kann eine hocheffiziente Behandlung der Objekte mit Behandlungsflüssigkeit durchgeführt werden. Im Besonderen kann das Risiko einer fehlerhaften bzw. mangelbehafteten Behandlung für große Chargenmengen an Objekten weitestgehend minimiert werden. Im Falle einer Erfassung und farberkennungstechnischen Auswertung einer signifikanten Verfärbung bzw. behandlungsinduzierten Farbänderung an einem metallischen Werkstoff, können Gegenmaßnahmen ergriffen werden, um eine weitere, mangelbehafte Behandlung großer Mengen an Objekten mit der Behandlungsflüssigkeit, und die damit einhergehenden Verfärbungen an dem metallischen Werkstoff, hintanzuhalten bzw. zu verhindern. Somit können hohe Verluste, im Besonderen kommerzielle Verluste durch nicht mehr oder nur eingeschränkt verkaufbare Objekte bzw. Güter, wirksam hintangehalten werden.

Ein besonders hohes Risiko für Verfärbungen bzw. Veränderungen von metallischen Werkstoffen, besteht hierbei bei Behandlungen mit wässrigen Flüssigkeiten. Viele metallische Werkstoffe zeigen Wechselwirkungen, insbesondere chemische Wechselwirkungen mit wässrigen Milieus. Dies kann zum Beispiel Oxidationsvorgänge, Salzbildung oder Oberflächenauflösungserscheinungen umfassen. Insbesondere können erhitzte, wässrige Behandlungsflüssigkeiten und/oder Kondensatbildungen der Behandlungsflüssigkeit an metallischen Werkstoffen zu Veränderungen bzw. Verfärbungen führen. Daher ist bei Verwendung wässriger Behandlungsflüssigkeiten eine möglichst frühzeitige Erfassung und numerische Auswertung von Verfärbungen besonders vorteilhaft.

Wässrige Behandlungsflüssigkeiten können allerdings generell von Vorteil in vielerlei Hinsicht sein, und werden daher häufig zur Behandlung von einen metallischen Werkstoff aufweisenden Objekten eingesetzt. Zum Beispiel können Reinigungs- oder Oberflächenbearbeitungs- oder Temperierungsbehandlungen von metallaufweisenden Objekten gut mit wässrigen Behandlungsflüssigkeiten durchgeführt werden. Die zumal auch deshalb, da sich die Eigenschaften von wässrigen Flüssigkeiten durch die Zugabe von Chemikalien sehr gut und gezielt Einstellen lassen. Durch eine entsprechend chemisch zusammengesetzte, wässrige Behandlungsflüssigkeit, kann hierbei auch ein jeweiliger, metallischer Werkstoff der jeweiligen Objekte gezielt behandelt werden. Außerdem können wässrige Behandlungsflüssigkeiten in einem verhältnismäßig breiten Temperaturbereich temperiert werden, und sind wässrige Behandlungsflüssigkeiten gut verfügbar.

Das Entfernen oder die Abtrocknung der Behandlungsflüssigkeit von den Objekten kann grundsätzlich sowohl aktiv als auch passiv erfolgen. Zum Beispiel kann die Behandlungsflüssigkeit durch passives Abrinnen und/oder passives Verdampfen bzw. Abdampfen der Behandlungsflüssigkeit von den behandelten Objekten entfernt werden. Alternativ kann auch eine aktive bzw. unterstützte Entfernung der Behandlungsflüssigkeit vorgesehen sein. Beispielsweise können die Objekte zur aktiven Entfernung der Behandlungsflüssigkeit in eine weitere Zone bzw. Behandlungszone mit Trocknungsklima verbracht werden, und/oder aktiv in einem Luftstrom, vorzugsweise Heißluftstrom getrocknet werden.

Erfindungsgemäß ist vorgesehen, dass laufend bzw. fortwährend zumindest eine Teilmenge, bzw. laufend zumindest eines der mit Behandlungsflüssigkeit behandelten Objekte durch optische Erfassung des wenigstens einen Teilabschnitts überwacht wird. Im Prinzip ist es hierbei möglich, dass die optische Erfassung jeweils zumindest eines der mit Behandlungsflüssigkeit behandelten Objekte in festgelegten Zeitabständen, oder nach Behandlung einer festgelegten Anzahl an Objekten mit Behandlungsflüssigkeit erfolgt. Es sind auch stichprobenartige Erfassungen denkbar, wobei eine optische Erfassung jeweils zumindest eines der mit Behandlungsflüssigkeit behandelten Objekte durchaus auch in unregelmäßigen Abständen durchgeführt werden kann. Eine stichprobenartige, optische Erfassung des wenigstens einen Teilabschnittes von jeweils zumindest einem Objekt, kann hierbei durchaus manuell bzw. händisch durch eine Bedienperson erfolgen. Es aber auch möglich, dass der wenigstens eine Teilabschnitt bei allen behandelten Objekten optisch erfasst wird. Die letztere Durchführungsvariante stellt eine vergleichsweise aufwendige, jedoch besonders prozesssichere Ausführungsmöglichkeit dar.

Grundsätzlich ist auch vorstellbar, dass mehrere Teilabschnitte, oder sogar alle Teilabschnitte eines mit Behandlungsflüssigkeit behandelten Objektes zur Überwachung erfasst werden. In den meisten Fällen kann eine optische Erfassung jedoch auf einen Teilabschnitt eines Objektes beschränkt werden, insbesondere einen Teilabschnitt, bei welchem eine Veränderung durch Behandlung mit einer Behandlungsflüssigkeit besonders wahrscheinlich ist.

Die farberfassende Erfassungsvorrichtung kann im Prinzip durch jedwede Erfassungsvorrichtung gebildet sein, mittels welcher Licht bzw. Farben zuverlässig erkannt werden können, beispielsweise durch spektral auflösende bzw. spektralfotometrische Farbmessgeräte. Grundsätzlich können auch Farbsensoren eingesetzt werden. Hierbei ist jedoch allenfalls eine eingeschränkte Nutzbarkeit hinsichtlich der Erkennung eines eingeschränkten Spektralbereichs zu berücksichtigen. Bevorzugte Ausführungsformen für die farberfassende Erfassungsvorrichtung werden noch näher erläutert.

Eine quantitative, farberkennungstechnische Auswertung kann über ein Farbmodell durchgeführt werden. Als Beispiele für Farbmodelle können an dieser Stelle das CMYK-Farbmodell oder der RGB-Farbraum oder der L*a*b*-Farbraum genannt werden. Hierbei kann die erfasste Farbe bzw. der erfasste Farbton grundsätzlich hinsichtlich der spektralen Zusammensetzung und Farbeigenschaften, wie etwa Helligkeit oder Sättigung, in Farbkennwerte aufgespalten bzw. eingeteilt und beschrieben werden. Aufgrund solcher Farbmodelle lässt sich eine Farbe bzw. Farbvalenz somit durch numerische Farbkennwerte beschreiben. Im Besonderen können diese Farbkennwerte einer Farbe bzw. Farbvalenz einer sogenannten Farbort in einem Farbraum definieren, welcher die optisch erfasste Farbe bzw. Farbvalenz im Koordinatensystem des jeweiligen, zugrundeliegenden Farbraumes repräsentiert bzw. identifiziert. Auf Basis eines oder mehrerer solcher Farbkennwerte kann sodann eine Auswertung der optisch erfassten Daten bzw. Farbdaten erfolgen, und können etwaige Verfärbungen automatisiert quantitativ erfasst und numerisch beschrieben werden.

Hierbei ist von Vorteil, dass eine farberkennungstechnische Auswertung bzw. ein numerisch gebildeter Farbkennwert oder mehrere Farbkennwerte zur Beurteilung einer farblichen Veränderung des wenigstens einen, erfassten Teilabschnittes eines Objektes herangezogen werden können, ohne dass eine fortwährende, subjektive optische Begutachtung der Objekte durch eine menschliche Person erforderlich ist. Solche durch die Auswertevorrichtung automatisch, farberkennungstechnisch gebildeten Farbkennwerte können in weiterer Folge auch numerisch weiterverarbeitet werden, und können beispielsweise visuell angezeigt oder zum automatisierten Auslösen einer Maßnahme rechnerisch weiterverarbeitet werden.

Des Weiteren ist es möglich, numerische Farbkennwerte speicherplatzschonend zwecks späterer Verwendung zu speichern. Auf Basis gespeicherter Datensätze von Farbkennwerten können zum Beispiel statistische Auswertungen einfach durchgeführt und dargestellt werden. Vorteilhaft ist hierbei unter anderem, dass die gespeicherten Farbdatensätze zu einer späteren Analyse herangezogen werden können, beispielsweise um eine zeitliche Korrelation zwischen erfassten Verfärbungen der Objekte und bestimmten Ereignissen oder Umwelteinflüssen und Dergleichen herzustellen bzw. zu verifizieren.

Bei einer Weiterbildung des Verfahrens kann vorgesehen sein, dass die Objekte mittels einem Transportmittel in einer Transportrichtung durch eine oder mehrere aufeinanderfolgende Behandlungszone(n) hindurchgeführt werden, und nach Hindurchführung durch die Behandlungszone oder nach Hindurchführung durch die in Transportrichtung letztangeordnete der aufeinanderfolgenden Behandlungszonen der wenigstens eine Teilabschnitt des jeweils zumindest einen, zu erfassenden Objektes, oder von allen mit Behandlungsflüssigkeit behandelten Objekten optisch erfasst wird.

Dies stellt eine besonders verfahrenseffiziente, weitestgehend automatisierbare und kontinuierliche Verfahrensführung zur Behandlung der Objekte mit Behandlungsflüssigkeit dar.

Außerdem kann es zweckmäßig sein, wenn das jeweils zumindest eine, zu erfassende bzw. zu überwachende Objekt durch eine Überwachungszone, umfassend die farberfassende Erfassungsvorrichtung, hindurchgeführt wird.

Auf diese Weise kann auch die optische Erfassung des wenigstens einen Teilabschnittes zumindest eines der mit Behandlungsflüssigkeit behandelten Objekte weitestgehend automatisiert, und effizient im kontinuierlichen Betrieb erfolgen. Hierbei kann zum Beispiel vorgesehen sein, dass eine Überwachungszone umfassend die optische Erfassungsvorrichtung, in einem der oder den Behandlungszone(n) nachgeordneten Bereich derart angeordnet bzw. installiert ist, dass eine Teilmenge der mit Behandlungsflüssigkeit behandelten Objekte oder aber auch alle behandelten Objekte optisch erfasst werden können.

Grundsätzlich kann vorgesehen sein, dass Objekte aufweisend einen Aluminiumwerkstoff mit wässriger Behandlungsflüssigkeit behandelt werden, und dass wenigstens ein einen Aluminiumwerkstoff aufweisender Teilabschnitt des jeweils zumindest einen, zu erfassenden Objektes optisch erfasst wird.

Auf diese Weise kann eine häufig bei einer Behandlung von Aluminiumwerkstoffen aufweisenden Objekten mit wässriger Behandlungsflüssigkeit, auftretende Verfärbung, nämlich die sogenannte Brunnenwasserschwärze bzw. Brunnenwasserschwärzung optisch erfasst bzw. farberkennungstechnische ausgewertet werden. Unter einem Aluminiumwerkstoff werden insbesondere Aluminium und Aluminiumlegierungen verstanden.

Bei einer Verfahrensvariante kann zum Beispiel vorgesehen sein, dass in wenigstens einer Behandlungszone eine jeweilige Außenseite der Objekte mit einer temperierten Behandlungsflüssigkeit behandelt wird.

Behandlungen mit einer temperierten Behandlungsflüssigkeit sind insbesondere geeignet, um Objekte umfassend einen metallischen Werkstoff gezielt zu erhitzen oder abzukühlen. Auf diese Weise kann das Ergebnis der Behandlung durch die jeweilige Temperatur der Behandlungsflüssigkeit gesteuert bzw. beeinflusst werden, beispielsweise um die Objekte nach einem vorgeschalteten Verfahrensschritt gezielt durch die Behandlungsflüssigkeit abzukühlen.

Des Weiteren kann vorgesehen sein, dass die Objekte in wenigstens einer Behandlungszone mit einer Behandlungsflüssigkeit aufweisend eine Temperatur zwischen 45 °C und 130 °C behandelt werden. Im Besonderen kann vorgesehen sein, dass die Objekte mit einer Behandlungsflüssigkeit, aufweisend eine Temperatur zwischen 50 °C und 100 °C, insbesondere zwischen 60 °C und 90 °C behandelt werden.

Generell können Behandlungsvorgänge für Objekte durch Behandlung mit einer erhitzten Behandlungsflüssigkeit effizienter durchgeführt werden. Dies kann beispielsweise einen Reinigungsvorgang für die Objekte betreffen.

Eine Behandlung mit einer temperierten Behandlungsflüssigkeit kann aber auch zu anderen Zwecken dienen.

Erfindungsgemäß ist vorgesehen, dass die Objekte durch Behältnisse gebildet sind, und dass die Behältnisse vor der Behandlung mit Behandlungsflüssigkeit mit einem Inhalt, insbesondere mit einem Lebensmittel befüllt und verschlossen werden.

In diesem Falle wird eine Temperierung der Außenseite der Objekte bzw. Behältnisse indirekt zum Zwecke einer Temperierung des Inhalts bzw. des im Behältnis beinhalteten Lebensmittels durchgeführt. Vorteilhaft ist hierbei, dass die Behandlungsflüssigkeit nicht in direkten Kontakt mit dem Inhalt bzw. Lebensmittel kommt. Mögliche negative Auswirkungen der Behandlungsflüssigkeit auf den Inhalt können auf diese Weise ausgeschlossen werden, und kann dennoch eine Temperierung der Inhalte der Behältnisse durchgeführt werden. Beispielsweise kann ein Lebensmittel zur Behandlung gezielt erwärmt werden, oder zur Konservierung gezielt abgekühlt werden.

Im Besonderen kann vorgesehen sein, dass die Behältnisse mit einem Lebensmittel befüllt und verschlossen werden, und das Lebensmittel in der wenigstens einen Behandlungszone pasteurisiert wird.

Durch diese Verfahrensführung kann im Besonderen die Haltbarkeit eines Lebensmittels deutlich gesteigert werden.

Zweckmäßig kann eine Verfahrungsführung sein, bei welcher die Behandlungsflüssigkeit von dem jeweils zumindest einen Objekt vor der optischen Erfassung des wenigstens einen Teilabschnittes entfernt wird.

Hierdurch können insbesondere störende Einflüsse durch die Behandlungsflüssigkeit, etwa durch Reflexionseffekten oder Streulichteffekt, oder etwa durch eine Eigenfärbung der Behandlungsflüssigkeit, während der optischen Erfassung des wenigstens einen Teilabschnittes des zumindest einen Objektes hintangehalten werden. Im Besonderen kann eine Verfälschung bzw. ein falsches Ergebnis der farberkennungstechnischen Auswertung durch den Einfluss der Behandlungsflüssigkeit vermieden werden. Eine Entfernung der Behandlungsflüssigkeit kann hierbei zum Beispiel durch passives Abrinnen und/oder Abdampfen der Behandlungsflüssigkeit von dem Objekt erfolgen. Bevorzugt wird die Behandlungsflüssigkeit aktiv bzw. mit Unterstützungsmittel von dem zumindest einen Objekt entfernt, beispielsweise unterstützt durch eine Luftstrom, insbesondere Heißluftstrom, oder etwa durch Erzeugung eines Unterdrucks.

Bei einer bevorzugten Verfahrensvariante kann vorgesehen sein, dass in einer Überwachungszone ein Erfassungsbereich der farberfassenden Erfassungsvorrichtung gegenüber einem Umgebungslicht zumindest weitestgehend abschottet bzw. abgeschattet wird, und der wenigstens eine, optisch zu erfassende Teilabschnitt des jeweils zumindest einen Objekts mittels einer Beleuchtungsvorrichtung, insbesondere mittels einer LED-Beleuchtungsvorrichtung, mit Weißlicht beleuchtet wird.

Dadurch kann eine Verfahrensführung zur Überwachung bzw. zur optischen Erfassung bereitgestellt werden, welche zumindest weitestgehend unabhängig von einem Einfluss eines jeweiligen Umgebungslichts ist. Im Besonderen kann auf diese Weise eine möglichst objektivierte und vor allem reproduzierbare Erkennung von Verfärbungen der Objekte durch die Behandlung mit Behandlungsflüssigkeit durchgeführt werden. Durch die Beleuchtung mit Weißlicht unter möglichst konstant gehaltenen Bedingungen, kann auch die Erfassungs- und Auswertegenauigkeit weiter gesteigert werden, und können der Farbkennwert oder die Farbkennwerte mit erhöhter Zuverlässigkeit gebildet werden. Insgesamt kann dadurch auch die Genauigkeit, Zuverlässigkeit und Reproduzierbarkeit des Verfahrensschrittes zur Überwachung bzw. Qualitätsüberwachung der Objekte verbessert werden.

Des Weiteren kann vorgesehen sein, dass eine Beleuchtungshelligkeit der Beleuchtungsvorrichtung für den wenigstens einen, optisch zu erfassenden Teilabschnitt, an eine Hindurchführungsgeschwindigkeit der optisch zu erfassenden Objekte durch die Überwachungszone angepasst wird.

Auf diese Weise kann eine ausreichende Beleuchtungshelligkeit bzw. Lichtstärke der Beleuchtungsvorrichtung für eine jeweilige, von der Hindurchführungsgeschwindigkeit bzw. der Hindurchführfrequenz abhängige, Belichtungszeit für den jeweiligen, zumindest einen Teilabschnitt gewählt werden. Im Besonderen kann vorgesehen sein, dass bei einer hohen Hindurchführungsgeschwindigkeit der optisch zu erfassenden Objekte, aufgrund der verhältnismäßig geringen, möglichen Belichtungszeit, eine hohe Beleuchtungshelligkeit bzw. große Lichtstärke gewählt wird. Im Falle einer geringeren Hindurchführungsgeschwindigkeit durch die Überwachungszone, kann eine vergleichsweise geringere Beleuchtungshelligkeit gewählt werden, da höhere Belichtungszeiten möglich sind.

Zweckmäßig kann auch eine Verfahrensführung sein, bei welcher jeweils ein Grenzwert für den oder die farberkennungstechnisch gebildeten Farbkennwert(e) festgelegt wird, und dass der oder die farberkennungstechnisch gebildeten Farbkennwert(e) mit einem jeweils zugeordneten Grenzwert verglichen werden.

Hierdurch kann für jeden farberkennungstechnisch bzw. auswertungstechnisch gebildeten Farbkennwert ein jeweils zugehöriger Grenzwert festgelegt werden. Durch Vergleich eines Farbkennwertes mit dem jeweils zugehörigen Grenzwert kann sodann ein Ausmaß einer Verfärbung effizient erkannt und beurteilt, bzw. numerisch, rechnerisch analysiert werden.

In weiterer Folge kann vorgesehen sein, dass bei einer Überschreitung eines festgelegten Grenzwertes durch einen diesem Grenzwert zugeordneten Farbkennwert, eine oder mehrere Maßnahme(n) durchgeführt wird bzw. werden.

Eine derartige Verfahrungsführung erlaubt ein möglichst schnelles Eingreifen im Falle der Detektion bzw. Erfassung einer Verfärbung. Eine Maßnahme kann hierbei im Prinzip manuell durch Bedienpersonal der Vorrichtung eingeleitet werden. Natürlich kann auch ein automatisiertes, bzw. steuerungstechnisches Durchführen einer Maßnahme oder mehrerer Maßnahmen vorgesehen sein. Hierzu kann mit der Auswertevorrichtung eine Steuerungsvorrichtung signalverbunden sein, welche Steuerungsvorrichtung nach einer rechnerisch festgestellten Überschreitung eines Grenzwertes zur Durchführung von Maßnahmen bzw. Gegenmaßnahmen ausgebildet, bzw. zur Steuerung der Maßnahmen mit geeigneten Maßnahmemitteln steuerungstechnisch signalverbunden ist.

Zum Beispiel kann vorgesehen sein, dass als Maßnahme ein Alarm ausgelöst wird.

Dadurch kann eine erfasste bzw. detektierte Verfärbung effizient und möglichst rasch angezeigt werden. In weiterer Folge kann beispielsweise Betriebspersonal auf den Alarm entsprechend reagieren.

Es kann auch zweckmäßig sein, wenn als Maßnahme eine Änderung der chemischen Zusammensetzung der Behandlungsflüssigkeit vorgenommen wird.

Solche Änderungen der chemischen Zusammensetzung können wirkungsvoll hinsichtlich einer Vermeidung von Veränderungen eines metallischen Werkstoffes im Zuge der Behandlung mit Behandlungsflüssigkeit, und damit zur Vermeidung von den damit einhergehenden Verfärbungen des metallischen Werkstoffes sein. Eine solche Maßnahme kann grundsätzlich händisch durch das Betriebspersonal veranlasst werden. Es ist aber auch möglich, dass eine Änderung der chemischen Zusammensetzung der Behandlungsflüssigkeit durch automatisierte, bzw. steuerbare Mittel durchgeführt wird. Hierbei können beispielsweise automatisiert steuerbare Ventile und Zuführmittel vorgesehen sein, welche eine Zugabe von Chemikalien aus Reservoirs in die Behandlungsflüssigkeit ermöglichen.

Zum Beispiel kann als Maßnahme eine Anpassung des pH-Wertes der Behandlungsflüssigkeit und/oder eine Zugabe von Inhibitoren, insbesondere von Phosphonaten in die Behandlungsflüssigkeit und/oder eine Zugabe von Wasserhärteregulatoren in die Behandlungsflüssigkeit durchgeführt werden.

Die angegebenen Maßnahmen haben sich als besonders geeignet erwiesen, um Veränderungen eines metallischen Werkstoffes, und den damit einhergehenden Verfärbungen des Werkstoffes entgegenzuwirken.

Im Falle einer wiederholten Verwendung der Behandlungsflüssigkeit zur Behandlung der Objekte, kann auch vorgesehen sein, dass als Maßnahme die Behandlungsflüssigkeit teilweise oder auch zur Gänze ausgetauscht, also zumindest teilweise durch frische Behandlungsflüssigkeit ersetzt wird. Diese Maßnahme ist besonders vorteilhaft bei Verfahren, bei welchen die Behandlungsflüssigkeit der oder den Behandlungszone(n) im Umlaufkreislaufverfahren wiederholt zugeführt wird.

Es kann aber auch vorteilhaft sein, wenn als Maßnahme eine Hindurchführungsgeschwindigkeit der Objekte durch die Behandlungszone(n) geändert wird, oder die Hindurchführung der Objekte gestoppt wird.

Auf diese Weise kann vor allem durch Verringerung der Behandlungsrate bzw. Reduzierung der Menge der pro Zeiteinheit behandelten Objekte, die Anzahl an mangelhaften Objekten bzw. Objekten mit unerwünschten Verfärbungen eines metallischen Werkstoffes reduziert werden.

Alternativ oder zusätzlich kann es sinnvoll sein, dass als Maßnahme eine Zufuhrtemperatur einer in eine Behandlungszone eingeleiteten Behandlungsflüssigkeit geändert wird.

Auch diese Maßnahme hat sich zur grundsätzlich als geeignet erwiesen, um Verfärbungen eines metallischen Werkstoffes im Zuge einer Behandlung mit Behandlungsflüssigkeit hintanzuhalten. Zumindest können dadurch Mängel durch Verfärbungen zeitweilig hintangehalten werden, bis andere Maßnahmen zur Vermeidung von Verfärbungen durchgeführt werden.

Nach Durchführung derartiger, anderer Maßnahmen, beispielsweise eine Änderung der chemischen Zusammensetzung, kann die Behandlungsflüssigkeit sodann wieder mit der ursprünglichen, zur Behandlung der Objekte geeigneten Temperatur zugeführt werden. Allenfalls können Objekte, welche durch die angegebene Maßnahme mit Behandlungsflüssigkeit mit veränderter Temperatur behandelt wurden, sodann der Behandlung nochmals zugeführt werden.

Bei einer weiteren, bevorzugten Ausführungsform kann vorgesehen sein, dass der wenigstens eine, optisch erfasste Teilabschnitt des jeweils zumindest einen Objekts farberkennungstechnisch im L*a*b*-Farbraum bzw. L*a*b*-Farbenraum ausgewertet wird, und dass der L*-Farbkennwert und/oder der a*-Farbkennwert und/oder der b*-Farbkennwert farberkennungstechnisch gebildet bzw. numerisch ermittelt wird.

Eine farbekennungstechnische Auswertung im L*a*b*-Farbraum ist unter anderem deswegen vorteilhaft, da damit ein Farbmodell für die Auswertung zugrunde gelegt werden kann, welches geräteunabhängig und wahrnehmungsbezogen gestaltet bzw. definiert ist. Im Besonderen ist dieser Farbraum hinsichtlich einer menschlichen Wahrnehmung von Farben bzw. Farbvalenzen gut angepasst bzw. optimiert. Dadurch können etwaige Verfärbungen von metallischen Werkstoffen auch hinsichtlich einer menschlichen Empfindung für die Verfärbungen möglichst gut ausgewertet werden.

Im Besonderen kann vorgesehen sein, dass eine sogenannte Brunnenwasserschwärzung von Aluminiumwerkstoffen mittels des Verfahrens optisch erfasst, und farberkennungstechnisch ausgewertet wird. Diese Brunnenwasserschwärze tritt häufig bei Kontakt von Aluminiumwerkstoffen mit wässrigen Behandlungsflüssigkeiten auf, sodass eine Erfassung dieser Verfärbung von hoher Bedeutung für entsprechende Behandlungsverfahren ist. Meist sind die als Brunnenwasserschwärze bekannten Verfärbungen von Aluminiumwerkstoffen jedoch schwer erfassbar bzw. auswertbar. In diesem Zusammenhang kann vorgesehen sein, dass farberkennungstechnisch der b*-Farbkennwert gebildet wird. Überaschenderweise hat sich der b*-Farbkennwert als besonders gut geeignet für die optische Erfassung und farberkennungstechnische Auswertung der sogenannten Brunnenwasserschwärze erwiesen. Insbesondere bedingt die bräunliche bis schwarze Verfärbung durch Brunnenwasserschwärzung eine farberkennungstechnisch gut auswertbare Erhöhung des b*-Farbkennwertes, hin zu höheren, positiven Werten.

Bevorzugt wird das Verfahren derart durchgeführt, dass der wenigstens eine Teilabschnitt des jeweils zumindest einen Objekts mittels eines bildgebenden bzw. farbbilderfassenden Erfassungsmittels, insbesondere eine Farbbildkamera optisch erfasst wird.

Durch diese Art der optischen Erfassung von jeweils zumindest einem mit Behandlungsflüssigkeit behandelten Objekt, kann die Erfassung des wenigstens einen Teilabschnitts weiter verbessert werden. Dies zumal auch deshalb, da der erfasste Teilabschnitt bildlich aufgelöst werden kann. Dies stellt eine Verbesserung gegenüber Erfassungsvorrichtungen dar, welche für die farberkennungstechnische Bildung von Farbkennwerten lediglich einen Mittelwert über den erfassten Teilabschnitt liefern. Des Weiteren können auf diese Weise Verfärbungen auch bildlich dokumentiert, und zum Beispiel zwecks späterer Begutachtung oder zum Vergleichen mit anderen Verfärbungen archiviert bzw. gespeichert werden.

In Zusammenhang mit einer bildlichen Erfassung kann zum Beispiel auch vorgesehen sein, dass das optisch erfasste Abbild des wenigstens einen Teilabschnitts in Teilbilder aufgeteilt wird, und jedes Teilbild separat farberkennungstechnisch ausgewertet wird.

Auf diese Weise können Verfärbungen in dem wenigstens einen, erfassten Teilabschnitt bereichsweise bzw. bildabschnittsweise aufgelöst analysiert werden. Hierdurch können zum Beispiel Stellen bzw. Bereiche mit maximaler Verfärbung identifiziert werden. Dies kann wiederum hilfreich hinsichtlich Überlegungen zur Vermeidung von Verfärbungen an diesen Stellen bzw. Bereichen sein.

Bei einer weiteren Verfahrensvariante kann vorgesehen sein, dass ein Testobjekt bzw. Referenzobjekt gemeinsam mit den zu behandelnden Objekten mit Behandlungsflüssigkeit behandelt wird, wobei ein einen metallischen Werkstoff aufweisender Teilabschnitt des Testobjekts, nach der Behandlung mittels der farberfassenden Erfassungsvorrichtung optisch erfasst werden kann.

Hierdurch kann eine Verfahrensführung vorgenommen werden, bei welcher eine optische Erfassung eines der regulär mit Behandlungsflüssigkeit behandelten Objekte erübrigt werden kann. Dies kann beispielsweise dann von Vorteil sein, wenn die regulären Objekte durch verhältnismäßig große bzw. sperrige Gegenstände gebildet sind, wohingegen ein entsprechendes Testobjekt vergleichsweise klein gestaltet werden kann. In weiterer Folge kann eine verhältnismäßig klein gestaltete Überwachungszone zur optischen Erfassung des Testobjektes verwendet werden. Außerdem kann vorgesehen sein, dass ein entsprechendes Testobjekt wiederverwendet wird.

Im Falle von als Behältnisse ausgestalteter Objekte, kann hierbei beispielsweise lediglich ein besonders verfärbungsempfindlicher Teilabschnitt des entsprechenden Behältnisses durch ein Testobjekt nachgebildet sein. Zum Beispiel kann im Falle einer Behandlung von dosenförmig ausgestalteten Aluminiumbehältnissen, das Testobjekt durch eine Verschlusslasche bzw. den sogenannten Stay-On-Tab der Aluminiumbehältnisse bzw- -dosen gebildet sein. Solche Behandlungen, insbesondere mit einer erhitzten Behandlungsflüssigkeit werden häufig zum Zwecke einer Pasteurisierung von in den Behältnissen befindlichen Lebensmitteln vorgenommen. Diese Verschluss- bzw. Öffhungslaschen von Aluminiumdosen haben sich als besonders empfindlich gegenüber einer Verfärbung bzw. Brunnenwasserschwärzung im Zuge einer Behandlung zur Pasteurisierung erwiesen.

Ein Testobjekt kann hierbei gemeinsam mit den zu behandelnden Objekten durch die Behandlungszone(n) hindurchgeführt werden.

Dadurch kann das Testobjekt denselben Behandlungsbedingungen ausgesetzt werden, wie die restlichen Objekte.

Die Aufgabe der vorliegenden Erfindung wird aber auch durch eine Vorrichtung zur Behandlung und Überwachung bzw. Qualitätsüberwachung von einen metallischen Werkstoff, insbesondere einen Aluminiumwerkstoff aufweisenden Objekten gelöst.

Die Vorrichtung umfasst hierbei eine Behandlungszone oder mehrere Behandlungszonen zur Behandlung der Objekte, welche Behandlungszone(n) ein Zuführmittel zur Zuführung einer Behandlungsflüssigkeit aufweisen.

Wesentlich ist, dass eine Überwachungszone ausgebildet ist, in welcher Überwachungszone zur laufenden bzw. fortwährenden Überwachung der Objekte eine farbefassende Erfassungsvorrichtung zur optischen Erfassung wenigstens eines, einen metallischen Werkstoff, insbesondere einen Aluminiumwerkstoff aufweisenden Teilabschnittes von jeweils zumindest einem mit Behandlungsflüssigkeit behandelten Objekt angeordnet ist.

Die farberfassende Erfassungsvorrichtung ist zur datentechnischen Bereitstellung der optisch erfassten Daten bzw. Farbdaten des wenigstens einen Teilabschnittes mit einer Auswertevorrichtung signalverbunden. Die Auswertevorrichtung ist zur farberkennungstechnischen Auswertung der bereitgestellten Daten auf Basis eines Farbmodelles unter Bildung eines Farbkennwertes oder mehrerer Farbkennwerte ausgebildet.

Durch die angegebenen Merkmale kann eine Vorrichtung bereitgestellt werden, bei welcher eine zeitnahe bzw. rasche Erkennung von Mängeln durch Erfassung und farberkennungstechnische Auswertung von Verfärbungen von metallischen Werkstoffen, insbesondere nicht beschichteten metallischen Werkstoffen, noch im laufenden Betrieb der Behandlung der Objekte mit Behandlungsflüssigkeit ermöglicht ist. Mit einer derartigen Vorrichtung kann eine hocheffiziente Behandlung der Objekte mit Behandlungsflüssigkeit durchgeführt werden. Im Besonderen kann das Risiko einer fehlerhaften bzw. mangelbehafteten Behandlung großer Chargenmengen an Objekten weitestgehend minimiert werden. Im Besonderen können auch durch die Behandlung verursachte Verfärbungen an dem metallischen Werkstoff zeitnah erkannt, und durch Gegenmaßnahmen zumindest weitestgehend hintangehalten werden.

Das Zuführmittel kann zum Beispiel durch eine Rohrleitung zum Einleiten der Behandlungsflüssigkeit in die Behandlungszone(n) gebildet sein. Zusätzlich kann das Zuführmittel auch Elemente zum gezielten Ausrichten und/oder Verteilen der Behandlungsflüssigkeit in der oder den Behandlungszone(n) umfassen. Beispiele hierfür wären etwa Düsen oder Sprüh- bzw. Sprinklervorrichtungen.

Die Vorrichtung kann Führungselemente, beispielsweise Leitungsrohre umfassen, um die Behandlungsflüssigkeit in einem Umlaufkreislauf zu führen. Auf diese Weise kann die Behandlungsflüssigkeit im Betrieb der Vorrichtung der oder den Behandlungszone(n) wiederholt zugeführt werden.

Die farberfassende Erfassungsvorrichtung kann im Prinzip durch jedwede Erfassungsvorrichtung gebildet sein, mittels welcher Licht bzw. Farben zuverlässig erkannt werden können, beispielsweise durch spektral auflösende bzw. spektralfotometrische Farbmessgeräte. Grundsätzlich können auch Farbsensoren eingesetzt werden. Hierbei ist jedoch allenfalls eine eingeschränkte Nutzbarkeit hinsichtlich der Erkennung eines eingeschränkten Spektralbereichs zu berücksichtigen. Bevorzugte Ausführungsformen für die farberfassende Erfassungsvorrichtung werden noch näher erläutert.

Grundsätzlich kann die farberfassende Erfassungsvorrichtung in der Überwachungszone derart angeordnet bzw. ausgerichtet sein, dass laufend bzw. fortwährend zumindest eine Teilmenge, bzw. laufend zumindest eines der mit Behandlungsflüssigkeit behandelten Objekte durch optische Erfassung des wenigstens einen Teilabschnittes überwacht werden kann. Im Prinzip ist es hierbei möglich, dass die farberfassende Erfassungsvorrichtung zur optischen Erfassung jeweils zumindest eines der behandelten Objekte in festgelegten Zeitabständen, oder nach Behandlung einer festgelegten Anzahl an Objekten mit Behandlungsflüssigkeit ausgebildet ist. Es aber auch möglich, dass die Erfassungsvorrichtung derart in der Überwachungszone angeordnet ist, dass der wenigstens eine Teilabschnitt von allen mit Behandlungsflüssigkeit behandelten Objekten optisch erfasst werden kann. Hierzu kann die Erfassungsvorrichtung ein Erfassungsmittel mit einem großen optischen Erfassungsbereich aufweisen. Alternativ kann die Erfassungsvorrichtung auch eine Mehrzahl an Erfassungsmitteln aufweisen, um einen großen Überwachungsbereich optisch erfassen zu können.

Grundsätzlich ist auch vorstellbar, dass die Erfassungsvorrichtung eine Mehrzahl an Erfassungsmitteln zur Erfassung mehrere Teilabschnitte, oder sogar alle Teilabschnitte eines mit Behandlungsflüssigkeit behandelten Objektes aufweist. In den meisten Fällen kann eine optische Erfassung jedoch auf einen Teilabschnitt eines Objektes beschränkt werden, insbesondere einen Teilabschnitt, bei welchem eine Veränderung durch Behandlung mit einer Behandlungsflüssigkeit besonders wahrscheinlich ist.

Die Auswertevorrichtung kann grundsätzlich baulich separiert von der Erfassungsvorrichtung angeordnet sein. Zur Übertragung der optisch erfassten Daten an die Auswertevorrichtung kann im Prinzip jedwedes Datenübertragungsmittel eingesetzt werden. Vorzugsweise kann eine kabelgebundene oder kabellose Signalverbindung zwischen der Erfassungsvorrichtung und der Auswertevorrichtung vorgesehen sein. Die Auswertevorrichtung kann hierbei beispielsweise durch eine softwaresteuerbare Recheneinheit, etwa einen PC oder ein Tablet gebildet sein. Grundsätzlich kann aber auch vorgesehen sein, dass die Auswertevorrichtung baulich als integrierter Bestandteil der Erfassungsvorrichtung ausgebildet ist, beispielsweise Farbsensoren mit integrierter, auf einem Farbmodell basierender Auswertevorrichtung.

Bei einer Weiterbildung der Vorrichtung, kann vorgesehen sein, dass folgend auf die Behandlungszone(n) zur Behandlung der Objekte mit Behandlungsflüssigkeit, eine weitere Zone zur Entfernung oder Abtrocknung der Behandlungsflüssigkeit von den Objekten angeordnet ist.

Hierdurch können die behandelten Objekte anschließend an die Behandlung von der Behandlungsflüssigkeit befreit werden. So kann auch ein länger andauerndes Einwirken der Behandlungsflüssigkeit auf einen nicht beschichteten, metallischen Werkstoff der Objekte, nach der Behandlung in der oder den Behandlungszone(n) zur Behandlung der Objekte mit Behandlungsflüssigkeit, hintangehalten werden. Dadurch kann wiederum potentiellen, durch die Behandlungsflüssigkeit hervorgerufenen Veränderungen bzw. Verfärbungen eines metallischen Werkstoffes entgegengewirkt werden.

Die weitere Zone bzw. Behandlungszone zum Entfernen der Behandlungsflüssigkeit, kann beispielsweise ein einfacher Stellraum sein, in welchen die mit Behandlungsflüssigkeit behandelten Objekte verbracht werden können, und in welchem Stellraum die Behandlungsflüssigkeit von den Objekten Abrinnen und/oder Abdampfen kann. Optional kann die weitere Behandlungszone beispielsweise durch einen geschlossenen, klimatisierten Raum mit einem Trocknungsklima mit geringer, relativer Feuchte und gegebenenfalls erhöhter Lufttemperatur sein. Des Weiteren kann vorgesehen sein, dass der weiteren Zone zur Entfernung der Behandlungsflüssigkeit Mittel zur aktiven Entfernung der Behandlungsflüssigkeit von den Objekten zugeordnet sind, wie etwa ein Gebläse, insbesondere ein Heißluftgebläse.

Bei einer weiteren Ausgestaltungsform kann vorgesehen sein, dass die Vorrichtung ein Transportmittel zur Hindurchführung der Objekte durch die Behandlungszone oder mehrere aufeinanderfolgende Behandlungszonen aufweist.

Durch derartige Transportmittel kann ein effizienter, weitestgehend automatisierter und kontinuierlicher Betrieb der Vorrichtung durchgeführt werden, und können die Objekte mit hohen Taktraten mit Behandlungsflüssigkeit behandelt werden.

Des Weiteren kann vorgesehen sein, dass das Transportmittel oder eine weitere Transportvorrichtung zur Hindurchführung des jeweils zumindest einen, zu erfassenden Objektes durch die Überwachungszone ausgebildet ist.

Durch diese Merkmale kann auch die optische Erfassung des wenigstens einen Teilabschnittes zumindest eines der mit Behandlungsflüssigkeit behandelten Objekte weitestgehend automatisiert, und effizient im kontinuierlichen Betrieb erfolgen. Hierbei kann zum Beispiel vorgesehen sein, dass eine Überwachungszone umfassend die optische Erfassungsvorrichtung, in einem der oder den Behandlungszone(n) nachgeordneten Bereich derart angeordnet bzw. installiert ist, dass eine Teilmenge der behandelten Objekte oder aber auch alle mit Behandlungsflüssigkeit behandelten Objekte optisch erfasst werden können.

Grundsätzlich kann vorgesehen sein, dass die Überwachungszone bezogen auf eine Transportrichtung für die Objekte, folgend auf die letztangeordnete Behandlungszone angeordnet ist.

Auf diese Weise kann sichergestellt werden, dass das zumindest eine, zur Überwachung optisch zu erfassende Objekt, den vollständigen Behandlungszyklus durchläuft, und somit repräsentativ für die mit Behandlungsflüssigkeit behandelten Objekte ist.

Zweckmäßig kann auch eine Ausgestaltung der Vorrichtung sein, bei welcher bezogen auf eine Transportrichtung für die Objekte folgend auf die letztangeordnete Behandlungszone zur Behandlung der Objekte mit Behandlungsflüssigkeit eine zusätzliche Behandlungszone zur Entfernung von Behandlungsflüssigkeit von dem jeweils zumindest einen, zur optischen Erfassung vorgesehenen Objekt angeordnet ist.

Zum Beispiel eine Vorrichtung zum Abwischen von Behandlungsflüssigkeit, oder Vorrichtung zum Trocknen, etwa mittels eines Warmluftgebläses oder einer ähnlichen Vorrichtung. Die zusätzliche Zone zum Entfernen der Behandlungsflüssigkeit von dem kann somit bezogen auf die Transportrichtung zwischen der letztangeordneten Behandlungszone zur Behandlung der Objekte mit Behandlungsflüssigkeit, und der Überwachungszone angeordnet sein.

Durch Anordnung einer solchen zusätzlichen Zone bzw. Behandlungszone kann die Behandlungsflüssigkeit von dem zumindest einen, zu erfassenden Objekt rasch entfernt werden. Hierdurch können insbesondere störende Einflüsse durch die Behandlungsflüssigkeit, etwa durch Reflexionseffekten oder Streulichteffekt, oder etwa durch eine Eigenfärbung der Behandlungsflüssigkeit, während der optischen Erfassung des wenigstens einen Teilabschnittes des zumindest einen Objektes hintangehalten werden. Im Besonderen kann eine Verfälschung bzw. ein falsches Ergebnis der farberkennungstechnischen Auswertung durch den Einfluss der Behandlungsflüssigkeit vermieden werden. Eine Entfernung der Behandlungsflüssigkeit kann hierbei zum Beispiel durch passives Abrinnen und/oder Abdampfen der Behandlungsflüssigkeit von dem Objekt erfolgen. Vorzugsweise sind der zusätzlichen Zone zur Entfernung der Behandlungsflüssigkeit von dem zumindest einen Objekt, Mittel zur aktiven Entfernung bzw. Mittel zur Unterstützung der Entfernung der Behandlungsflüssigkeit zugeordnet. Dies können beispielsweise Mittel zur Erzeugung eines Trocknungsklimas in der zusätzlichen Behandlungszone sein, etwa Entfeuchtungs- und Temperierungsmittel. Alternativ oder zusätzlich können auch weitere Mittel, wie etwa ein Gebläse, insbesondere ein Heißluftgebläse oder Mittel zur Erzeugung eines Unterdrucks vorgesehen sein.

Bei der Vorrichtung ist auch vorgesehen, dass die Vorrichtung ein Heizmittel zum Erwärmen der Behandlungsflüssigkeit, und ein Kühlmittel zum Abkühlen der Behandlungsflüssigkeit umfasst, und dass wenigstens eine erste Behandlungszone zum Erwärmen der Objekte angeordnet ist. Bezogen auf eine Transportrichtung für die Objekte ist folgend auf die erste Behandlungszone wenigstens eine zweite Behandlungszone zum weiteren Erhitzen der Objekte angeordnet. Weiters ist bezogen auf die Transportrichtung für die Objekte folgend auf die zweite Behandlungszone wenigstens eine dritte Behandlungszone zum Abkühlen der Objekte angeordnet.

Durch eine derartige Anordnung von Behandlungszonen und Beschickung der Behandlungszonen mit Behandlungsflüssigkeit unterschiedlicher Temperatur, können die Objekte gezielt temperiert, insbesondere gezielt erwärmt und wieder abgekühlt werden. Auf diese Weise ist zum Beispiel eine gezielte, schonende Pasteurisierung von in, als Behältnissen ausgestalteten Objekten, abgefüllten Lebensmitteln durchführbar. Jeweils ein oder mehrere Heiz- und Kühlmittel können hierbei im Prinzip durch jedwede Art von Mitteln zum Erwärmen und/oder Abkühlen einer Behandlungsflüssigkeit gebildet sein, etwa durch Heiz- oder Kühlmedium durchflossene Wärmetauscher, welche durch Heiz- und/oder Kühlvorrichtungen beschickt sein können. Zum Einsatz können beispielsweise Dampferhitzer bzw. Kühltürme, oder auch Wärmepumpen kommen.

Bei einer weiteren Ausgestaltungsform der Vorrichtung kann vorgesehen sein, dass die Überwachungszone Mittel zur Abschottung bzw. Abschattung der Überwachungszone gegenüber einem Umgebungslicht umfasst, und eine Beleuchtungsvorrichtung, insbesondere eine LED-Beleuchtungsvorrichtung, zur Beleuchtung des wenigstens einen Teilabschnitts des jeweils zumindest einen Objekts mit Weißlicht aufweist.

Durch diese Merkmale kann im Betrieb der Vorrichtung eine optische Erfassung des wenigstens einen Teilabschnittes zumindest weitestgehend unabhängig von einem Einfluss von Umgebungslicht bewerkstelligt werden. Die Mittel zur Abschottung bzw. Abschattung gegenüber dem jeweiligen Umgebungslicht können durch lichtundurchlässige Umgrenzungselemente für die Überwachungszone gebildet sein. Durch die Beleuchtung mit Weißlicht unter möglichst konstant gehaltenen Bedingungen, kann auch die Erfassungs- und Auswertegenauigkeit weiter gesteigert werden, und können der Farbkennwert oder die Farbkennwerte mit erhöhter Zuverlässigkeit gebildet werden. Insgesamt kann dadurch auch die Genauigkeit, Zuverlässigkeit und Reproduzierbarkeit der optischen Erfassung des wenigstens einen Teilabschnittes verbessert werden.

Bei einer bevorzugten Weiterbildung der Vorrichtung kann vorgesehen sein, dass die farberfassende Erfassungsvorrichtung ein bildgebendes bzw. farbbilderfassendes Erfassungsmittel, insbesondere eine Farbbildkamera aufweist.

Durch eine bildgebende bzw. bilderfassende Erfassungsvorrichtung kann die Erfassung des wenigstens einen Teilabschnittes des zumindest einen Objektes weiter verbessert werden. Dies zumal auch deshalb, da der erfasste Teilabschnitt bildlich aufgelöst werden kann. Dies stellt eine Verbesserung gegenüber Erfassungsvorrichtungen dar, welche für die farberkennungstechnische Bildung von Farbkennwerten lediglich einen Mittelwert über den erfassten Teilabschnitt liefern. Des Weiteren können auf diese Weise Verfärbungen auch bildlich dokumentiert, und zum Beispiel zwecks späterer Begutachtung oder zum Vergleichen mit anderen Verfärbungen archiviert bzw. gespeichert werden.

Schließlich kann auch eine Ausgestaltungsform zweckmäßig sein, bei welcher an dem Transportmittel ein Testobjekt angeordnet ist, und bei welcher die farberfassende Erfassungsvorrichtung in der Überwachungszone zur optischen Erfassung eines einen metallischen Werkstoff aufweisenden Teilabschnittes des Testobjektes angeordnet ist.

Hierdurch kann die Vorrichtung derart betrieben werden, dass eine optische Erfassung eines der regulär mit Behandlungsflüssigkeit behandelten Objekte erübrigt werden kann. Dies kann beispielsweise dann von Vorteil sein, wenn die regulären Objekte durch verhältnismäßig große bzw. sperrige Gegenstände gebildet sind, wohingegen ein entsprechendes Testobjekt vergleichsweise klein gestaltet werden kann. In weiterer Folge kann eine verhältnismäßig klein gestaltete Überwachungszone zur optischen Erfassung des Testobjektes angeordnet sein. Das Testobjekt wird durch die Anordnung an dem Transportmittel im Betrieb der Vorrichtung denselben Behandlungsbedingungen ausgesetzt, wie die restlichen Objekte.

Im Falle von als Behältnisse ausgestalteter Objekte, kann hierbei lediglich ein besonders verfärbungsempfindlicher Teilabschnitt des entsprechenden Behältnisses durch ein Testobjekt gebildet bzw. nachempfunden sein. Zum Beispiel kann im Falle einer Vorrichtung zur Behandlung von dosenförmig ausgestalteten Aluminiumbehältnissen, das Testobjekt durch eine Verschlusslasche bzw. den sogenannten Stay-On-Tab der Aluminiumdosen gebildet sein. Derartige Aluminiumbehältnisse können beispielsweise in Behandlungsvorrichtungen zur Pasteurisierung von in den Aluminiumbehältnissen befindlichen Lebensmitteln mit Behandlungsflüssigkeit behandelt werden. Diese Verschluss- bzw. Öffnungslaschen von Aluminiumdosen haben sich als besonders empfindlich gegenüber einer Verfärbung bzw. Brunnenwasserschwärzung im Zuge einer Behandlung zur Pasteurisierung erwiesen.

Zum besseren Verständnis der Erfindung wird diese anhand der nachfolgenden Figuren näher erläutert.

Es zeigen jeweils in stark vereinfachter, schematischer Darstellung:
- Fig. 1: ein Ausführungsbeispiel für eine Vorrichtung zur Behandlung und Überwachung von einen metallischen Werkstoff aufweisenden Objekten, in Seitenansicht;
- Fig. 2: ausschnittsweise ein Ausführungsbeispiel für eine Vorrichtung zur Behandlung und Überwachung von einen metallischen Werkstoff aufweisenden Objekten, in Draufsicht von oben;
- Fig. 3: ausschnittsweise ein weiteres Ausführungsbeispiel für eine Vorrichtung zur Behandlung und Überwachung von einen metallischen Werkstoff aufweisenden Objekten, in Draufsicht von oben;
- Fig. 4: ausschnittsweise ein weiteres Ausführungsbeispiel für eine Vorrichtung zur Behandlung und Überwachung von einen metallischen Werkstoff aufweisenden Objekten, in Draufsicht von oben;
- Fig. 5: ausschnittsweise ein weiteres Ausführungsbeispiel für eine Vorrichtung zur Behandlung und Überwachung von einen metallischen Werkstoff aufweisenden Objekten, in Draufsicht von oben;
- Fig. 6: eine Draufsicht von oben auf einen optisch erfassten Teilabschnitt eines behandelten Objektes.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

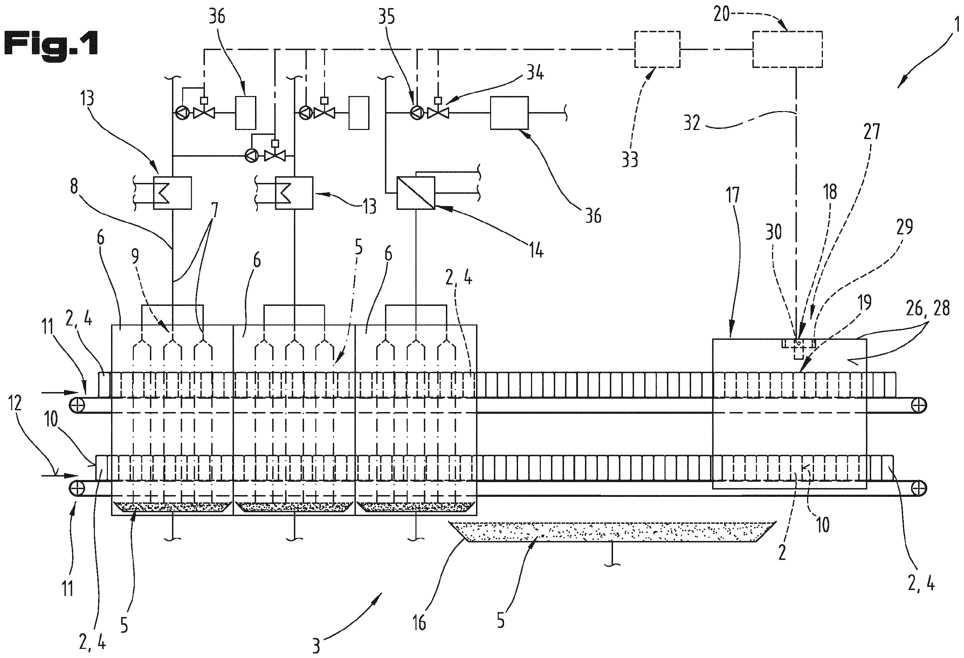

In der Fig. 1 ist ein Ausführungsbeispiel für eine Vorrichtung 1 zur Behandlung und Überwachung bzw. Qualitätsüberwachung von einen metallischen Werkstoff aufweisenden, insbesondere einen nicht beschichteten metallischen Werkstoff aufweisenden Objekten 2 schematisch in Seitenansicht dargestellt. Das dargestellte Ausführungsbeispiel für eine Vorrichtung 1 ist durch eine Pasteurisierungsanlage 3 bzw. einen sogenannten Tunnelpasteur gebildet, in welcher im Besonderen als Behältnisse 4 ausgestaltete Objekte 2 mit einer Behandlungsflüssigkeit 5 behandelt werden können.

Im Folgenden wird die Vorrichtung 1 bzw. das Verfahren anhand der in den Figuren dargestellten Pasteurisierungsanlage 3 näher erläutert. Die Vorrichtung 1 und das Verfahren zur Behandlung mit Behandlungsflüssigkeit und Überwachung, können hierbei auch Bestandteil eines übergeordneten Verfahrens bzw. Bestandteil einer übergeordneten Vorrichtung sein. Bei den einen metallischen Werkstoff aufweisenden Objekten 2 kann es sich um Metallbehältnisse oder nicht erfindungsgemäß Verschlusskappen für Behältnisse aus Glas oder Kunststoff, beispielsweise um Schraubverschlüsse aus Metall und dergleichen handeln.

Bei der in der Fig. 1 dargestellte Pasteurisierungsanlage 3, ist vorgesehen, dass die als Behältnisse 4 ausgestalteten Objekte 2 vor der Behandlung mit Behandlungsflüssigkeit mit einem Inhalt, insbesondere einem Lebensmittel befüllt, und verschlossen werden. Die Objekte 2 bzw. Behältnisse 4 können hierbei zum Beispiel als metallischem Werkstoff einen Aluminiumwerkstoff aufweisen. Im Besonderen können die Objekte 2 bzw. Behältnisse 4, welche in der Vorrichtung 1 bzw. der Pasteurisierungsanlage 3 mit Behandlungsflüssigkeit 5 behandelt werden, etwa durch Aluminium-Getränkedosen gebildet sein und mit einem flüssigen Lebensmittel befüllt sein. Die Behältnisse 4 können in solchen Fällen flüssigkeitsdicht oder sogar wenigstens weitestgehend gasdicht verschlossen sein.

Zur Behandlung der Objekte 2 bzw. der Behältnisse 4, kann die Vorrichtung 1 eine Behandlungszone 6 oder mehrere Behandlungszonen 6 umfassen. Bei dem in der Fig. 1 dargestellten Ausführungsbeispiel für eine Pasteurisierungsanlage 3, umfasst die Vorrichtung 1 drei Behandlungszonen 6 zur Behandlung der Objekte 2 mit einer Behandlungsflüssigkeit 5. Die drei Behandlungszonen 6 weisen jeweils zumindest ein Zuführmittel 7, beim dargestellten Ausführungsbeispiel mehrere Zuführmittel 7 zum Einleiten bzw. zur Zuführung der Behandlungsflüssigkeit 5 in die Behandlungszonen 6 auf. Die Zuführmittel 7 können zum Beispiel durch Rohrleitungen 8 gebildet sein. Außerdem können die Zuführmittel 7 zum Beispiel Verteilungsmittel 9, etwa Sprinklervorrichtungen oder Sprühdüsen etc. umfassen, mittels welchen die Behandlungsflüssigkeit 5 in der oder den Behandlungszone(n) 6 verteilt werden kann.

Auf diese Weise kann im Betrieb der Vorrichtung 1 bzw. der als Beispiel in der Fig. 1 dargestellten Pasteurisierungsanlage 3, das Verfahren zur Behandlung und Überwachung bzw. Qualitätsüberwachung von einen metallischen Werkstoff aufweisenden Objekten 2 durchgeführt werden. Die Objekte 2 bzw. die dargestellten Aluminiumbehältnisse 4 werden hierbei in der oder den Behandlungszone(n) 6 mit einer Behandlungsflüssigkeit 5 behandelt. Bei dem in der Fig. 1 dargestellten Ausführungsbeispiel der Vorrichtung 1 kann es sich um einen sogenannten Tunnelpasteur handeln, bei welchem in den Behandlungszonen 6 die Behandlungsflüssigkeit 5 auf eine jeweilige Außenseite 10 der Objekte 2 bzw. Behältnisse 4 einwirkt bzw. appliziert wird.

Die Behandlungsflüssigkeit 5 kann hierbei zur Behandlung der Objekte 2 wiederverwendet, also zur wiederholten Behandlung der Objekte 2 in der oder den Behandlungszone(n) 6 verwendet werden. Hierzu kann zum Beispiel vorgesehen sein, dass die Behandlungsflüssigkeit 5 in einem Umlaufkreislauf (nicht dargestellt) geführt, und der oder den Behandlungszone(n) 6 wiederholt zugeführt wird.

Im Besonderen können die einen metallischen Werkstoff aufweisenden Objekte 2 bzw. die Behältnisse 4 mit einer wässrigen Behandlungsflüssigkeit 5 behandelt werden. Behandlungen mit einer wässrigen Behandlungsflüssigkeit 5 können generell von Vorteil in vielerlei Hinsicht sein. Zum Beispiel können Reinigungs- oder Oberflächenbearbeitungs- oder Temperierungsbehandlungen von einen metallischen Werkstoff aufweisenden Objekten 2 gut mit einer wässrigen Behandlungsflüssigkeit 5 durchgeführt werden. Die zumal auch deshalb, da sich die Eigenschaften von wässrigen Flüssigkeiten durch die Zugabe von Chemikalien sehr gut und auch gezielt einstellen lassen. Durch eine entsprechend chemisch zusammengesetzte, wässrige Behandlungsflüssigkeit 5, kann hierbei auch ein jeweiliger, metallischer Werkstoff der Objekte 2 gezielt behandelt werden. Außerdem können wässrige Behandlungsflüssigkeiten 5 in einem verhältnismäßig breiten Temperaturbereich temperiert werden, und sind wässrige Behandlungsflüssigkeiten generell gut verfügbar.

Vorzugsweise werden die zu behandelnden Objekte 2 bzw. die Behältnisse 4 mittels einem Transportmittel 11 durch eine oder mehrere aufeinanderfolgende Behandlungszone(n) 6 hindurchgeführt. Hierzu kann die Vorrichtung 1 ein Transportmittel 11 zur Hindurchführung der Objekte 2 durch die Behandlungszone 6 oder mehrere aufeinanderfolgende Behandlungszonen 6 aufweisen. Ein derartiges Transportmittel 11 kann beispielsweise durch ein Förderband, auf welches die Objekte 2 gestellt bzw. platziert werden können, gebildet sein. Bei der in der

Fig. 1 als Beispiel für eine Vorrichtung 1 dargestellten Pasteurisierungsanlage 3, sind zwei derartige Transportmittel 11 angeordnet, sodass die Objekte 2 bzw. die mit Lebensmittel befüllten Behältnisse 4 im Betrieb der Vorrichtung 1 in zwei übereinander angeordneten Transportebenen in einer Transportrichtung 12 durch die aufeinanderfolgenden Behandlungszonen 6 hindurchgeführt werden.

Zur Behandlung der Objekte 2 bzw. Behältnisse 4 in der oder den Behandlungszone(n) 6 ist vorgesehen, dass in den Behandlungszonen 6 eine jeweilige Außenseite 10 mit einer temperierten Behandlungsflüssigkeit 5 behandelt wird. Hierzu umfasst die Vorrichtung 1 ein Heizmittel 13 zum Erwärmen der Behandlungsflüssigkeit 5, und ein Kühlmittel 14 zum Abkühlen der Behandlungsflüssigkeit 5. Durch diese Mittel 13, 14 zum Temperieren der Behandlungsflüssigkeit 5, und/oder auch durch Mischen von Behandlungsflüssigkeiten mit unterschiedlicher Temperatur, kann einer jeweiligen Behandlungszone 6 Behandlungsflüssigkeit 5 mit gezielt eingestellter Temperatur zugeführt werden.

Heizmittel 13 und Kühlmittel 14 sind in der Fig. 1 jeweils nur schematisch dargestellt. Es versteht sich, dass jeweils anlagen- bzw. vorrichtungsabhängig, ein oder mehrere Heizmittel 13 und Kühlmittel 14 angeordnet sein können. Beispielsweise können etwa Heiz- bzw. Kühlmedium durchflossene Wärmetauscher ausgebildet sein, mittels welchen die Behandlungsflüssigkeit 5 jeweils zonenweise gezielt erhitzt oder abgekühlt werden können. Solche Wärmetauscher können wiederum durch Heiz- und/oder Kühlvorrichtungen beschickt werden. Beispielsweise können Dampferhitzer bzw. Kühltürme, oder auch Wärmepumpen hierfür verwendet werden.

Bei dem in der Fig. 1 dargestellten Ausführungsbeispiel der Pasteurisierungsanlage 3 bzw. eines Tunnelpasteurs, ist wenigstens eine erste Behandlungszone 6, zum Beispiel die in Fig. 1 linkerhand dargestellte Behandlungszone 6, zum Erwärmen der Objekte 2 bzw. Behältnisse 4 angeordnet. Dieser Behandlungszone kann zum Erwärmen bzw. Vorwärmen der Objekte 2 bzw. Behältnisse 4 eine erwärmte Behandlungsflüssigkeit 5 zugeführt werden. Des Weiteren ist bezogen auf die Transportrichtung 12 für die Objekte 2 folgend auf die erste Behandlungszone 6 wenigstens eine zweite Behandlungszone 6 zum weiteren Erhitzen der Objekte 2, bzw. der mit Lebensmittel befüllten Behältnisse 4 angeordnet. Außerdem ist vorgesehen, dass bezogen auf die Transportrichtung 12 für die Objekte 2 folgend auf die zweite Behandlungszone 6 wenigstens eine dritte Behandlungszone 6 zum Abkühlen der Objekte 2 bzw. Behältnisse 4 angeordnet ist. Selbstverständlich können hierbei auch mehr als eine Behandlungszone 6 jeweils zum Erwärmen, weiteren Erhitzen und Abkühlen angeordnet sein.

Den in der Fig.1 dargestellten Behandlungszonen 6 kann zum Erwärmen, weiteren Erhitzen, und schließlich Abkühlen der Objekte 2, jeweils eine entsprechend temperierte Behandlungsflüssigkeit 5 zugeführt werden. Beispielsweise kann vorgesehen sein, dass die Objekte 2 in wenigstens einer Behandlungszone 6 mit einer Behandlungsflüssigkeit 5 aufweisend eine Temperatur zwischen 45 °C und 130 °C behandelt werden. Bei der in der Fig. 1 dargestellten Pasteurisierungsanlage 3, können im Besonderen die Objekte 2 bzw. die mit Lebensmittel befüllten und verschlossenen Behältnisse 4, in wenigstens einer Behandlungszone 6, insbesondere in der in Fig. 1 mittig dargestellten Behandlungszone 6, mit einer Behandlungsflüssigkeit 5, aufweisend eine Temperatur zwischen 50 °C und 100 °C, vorzugsweise aufweisend eine Temperatur zwischen 60 °C und 90 °C, behandelt werden. Durch diese Verfahrensführung können die Lebensmittel in den verschlossenen Behältnissen 4 in der wenigstens einen Behandlungszone 6 pasteurisiert werden.

Wie des Weiteren in der Fig. 1 dargestellt ist, kann bei der Vorrichtung 1 eine weitere Behandlungszone 15 zur Entfernung oder Abtrocknung der Behandlungsflüssigkeit 5 von den Objekten 2 angeordnet sein. Diese weitere Behandlungszone 15 zur Entfernung der Behandlungsflüssigkeit 5 von den Objekten 2 bzw. Behältnissen 4 kann hierbei in Transportrichtung 12 für die Objekte 2 folgend auf die Behandlungszone(n) 6 zur Behandlung mit Behandlungsflüssigkeit 5 angeordnet sein. In dieser weiteren Behandlungszone 15 wird nach dem Behandeln der Objekte 2 mit Behandlungsflüssigkeit 5, die Behandlungsflüssigkeit 5 von den behandelten Objekten 2 entfernt oder abgetrocknet.

Hierbei kann zum Beispiel vorgesehen sein, dass in der weiteren Behandlungszone 15 die Behandlungsflüssigkeit 5 von den Objekten 2 bzw. den Behältnissen 4 abrinnt und/oder abdampft. Dies kann passiv und ohne weitere Hilfsmittel durchgeführt werden. Die abrinnende bzw. abgeronnene Behandlungsflüssigkeit 4 kann beispielsweise in einem Auffangbehälter 16 gesammelt, und entweder aus der Vorrichtung 1 abgeführt oder wiederverwendet werden. Alternativ zu dem in der Fig.1 dargestellten Ausführungsbeispiel, kann das Entfernen oder Abtrocknen aber auch aktiv, das heißt durch entsprechende Mittel unterstützt durchgeführt werden. Derartige Trocknungsverfahren bzw. derart ausgestaltete, weitere Behandlungszonen 6 zum Entfernen bzw. zur Abtrocknung der Behandlungsflüssigkeit 5 von den Objekten 2 werden anhand weiterer Ausführungsbeispiele noch näher erläutert.

Wesentlich für die Vorrichtung 1 ist, dass eine Überwachungszone 17 ausgebildet ist, wie dies auch in der Fig. 1 dargestellt ist. In dieser Überwachungszone 17 ist zur laufenden Überwachung der mit Behandlungsflüssigkeit 5 behandelten Objekte 2, eine farberfassende bzw. farbgebende Erfassungsvorrichtung 18 zur optischen Erfassung wenigstens eines, einen nicht beschichteten, metallischen Werkstoff aufweisenden Teilabschnittes 19 von jeweils zumindest einem mit Behandlungsflüssigkeit 5 behandelten Objekt 2 angeordnet. Wie weiters in der Fig. 1 veranschaulicht ist, ist die farberfassende Erfassungsvorrichtung 18 zur datentechnischen Bereitstellung der optisch erfassten Daten des wenigstens einen Teilabschnittes 19 mit einer Auswertevorrichtung 20 signalverbunden. Hierbei ist die Auswertevorrichtung 20 zur farberkennungstechnischen Auswertung der bereitgestellten Daten unter Bildung eines Farbkennwertes oder mehrerer Farbkennwerte ausgebildet.

Im Betrieb der Vorrichtung 1 bzw. der dargestellten Pasteurisierungsanlage 3, wird auf diese Weise zur laufenden Überwachung nach der Behandlung der Objekte 2 wenigstens ein, einen metallischen Werkstoff aufweisender Teilabschnitt 19 von jeweils zumindest einem mit Behandlungsflüssigkeit 5 behandelten Objekt 2 mittels der farberfassenden bzw. farbgebenden Erfassungsvorrichtung 18 optisch erfasst. Die optisch erfassten Daten des wenigstens einen Teilabschnitts 19 werden mittels einer Auswertevorrichtung 19 farberkennungstechnisch unter Bildung eines Farbkennwertes oder mehrerer Farbkennwerte ausgewertet. Diese farberkennungstechnische Auswertung kann beispielsweise auf Basis eines Farbmodelles, bei welchem numerischer Kennwerte zur Charakterisierung bzw. Definition einer Farbe definiert sind, erfolgen.

Behandlungsbedingte Mängel können hierdurch durch Erfassung und farberkennungstechnische Auswertung von Verfärbungen von metallischen Werkstoffen, noch im laufenden Betrieb der Behandlung der Objekte 2 mit Behandlungsflüssigkeit 5 erkannt werden. Dadurch kann wiederum die Effizienz der Behandlung mit Behandlungsflüssigkeit 5 verbessert werden, da nach Erfassung einer Verfärbung durch farberkennungstechnische Auswertung, Gegenmaßnahmen zur Vermeidung weiterer mangelhafter Behandlung ergriffen werden können.

Die farberfassende Erfassungsvorrichtung 18 kann im Prinzip durch jedwede Erfassungsvorrichtung gebildet sein, mittels welcher Licht bzw. Farben zuverlässig erkannt werden können, beispielsweise durch spektral auflösende bzw. spektralfotometrische Farbmessgeräte. Grundsätzlich ist es möglich, dass die Erfassungsvorrichtung 18 eine Mehrzahl an Erfassungsmitteln, beispielsweise Farbsensoren oder Farbmessgeräte zur Erfassung mehrere Teilabschnitte 19, oder sogar alle Teilabschnitte des jeweils zumindest einen, mit Behandlungsflüssigkeit 5 behandelten Objektes 2 bzw. Behältnisses 4 aufweist. In den meisten Fällen kann eine optische Erfassung jedoch auf einen Teilabschnitt 19 eines Objektes 2 beschränkt werden. Dies kann insbesondere ein Teilabschnitt 19 sein, bei welchem eine Veränderung durch Behandlung mit einer Behandlungsflüssigkeit 5 besonders wahrscheinlich ist. Bei dem in der Fig. 1 dargestellten Ausführungsbeispiel für eine als Pasteurisierungsanlage 3 ausgestaltete Vorrichtung 1, kann wie dargestellt zum Beispiel ein oberer, bzw. nach oben gerichteter Teilabschnitt 19 der Objekte 2 bzw. Behältnisse 4 durch optische Erfassung und farberkennungstechnische Auswertung, überwacht werden.

Bei der als Vorrichtung 1 zur Behandlung von einen metallischen Werkstoff aufweisenden Objekten 2 dargestellten Pasteurisierungsanlage 3, werden mit einem Lebensmittel, insbesondere einem Getränk befüllte Aluminiumbehältnisse 4 bzw. Aluminiumdosen als einen Aluminiumwerkstoff aufweisende Objekte 2 mit wässriger Behandlungsflüssigkeit 5 behandelt und nachfolgend überwacht. Hierbei kann es zweckmäßig sein, dass wenigstens ein einen Aluminiumwerkstoff aufweisender Teilabschnitt 19 des jeweils zumindest einen, zur Erfassung vorgesehen Objektes 2, optisch erfasst wird. Auf diese Weise kann eine häufig bei einer Behandlung von Aluminiumwerkstoffen aufweisenden Objekten 2 mit wässriger Behandlungsflüssigkeit 5, auftretende Verfärbung, nämlich die sogenannte Brunnenwasserschwärze bzw. Brunnenwasserschwärzung optisch erfasst bzw. farberkennungstechnische ausgewertet werden. Derartige Aluminiumbehältnisse 4 weisen in einem oberen Teilabschnitt 19 bzw. an der Oberseite meist eine Verschluss- bzw. Öffnungslasche in Form eines sogenannten Stay-On-Tabs auf. Hierbei hat sich herausgestellt, dass dieser Teilabschnitt 19 besonders gefährdet für Verfärbungen ist, bzw. bei einer Behandlung mit wässriger Behandlungsflüssigkeit 5 besonders rasch behandlungsbedingte Farbänderungen erfahren kann. Im Besonderen können Verfärbungen bzw. Brunnenwasserschwärzungen im Zuge der Behandlung mit Behandlungsflüssigkeit derartiger Aluminiumbehältnisse 4 zuerst in diesem Teilabschnitt 19 auftreten, weshalb eine optische Erfassung und farberkennungstechnische Auswertung dieses Teilabschnittes 19 insbesondere sinnvoll ist, um Verfärbungen der entsprechenden Objekte 2 rasch und zuverlässig zu erkennen.

Wie aus der Fig. 1 des Weiteren ersichtlich ist, kann der wenigstens eine Teilabschnitt 19 des zumindest jeweils einen Objektes 2 bzw. zumindest jeweils eines der mit Behandlungsflüssigkeit 5 behandelten Behältnisse 4, nach Hindurchführung durch die in Transportrichtung 12 letztangeordnete der aufeinanderfolgenden Behandlungszonen 6 optisch erfasst werden. Hierzu kann die Überwachungszone 17 bezogen auf die Transportrichtung 12 für die Objekte 2 bzw. Behältnisse 4, folgend auf die letztangeordnete Behandlungszone 6, 15 angeordnet sein. Das jeweils zumindest eine, optisch zu erfassende Objekt 2 kann durch die Überwachungszone 17, umfassend die farberfassende Erfassungsvorrichtung 18, hindurchgeführt werden. Hierzu kann beispielsweise das Transportmittel 11 zur Hindurchführung des jeweils zumindest einen Objektes 2 durch die Überwachungszone 17 ausgebildet sein.

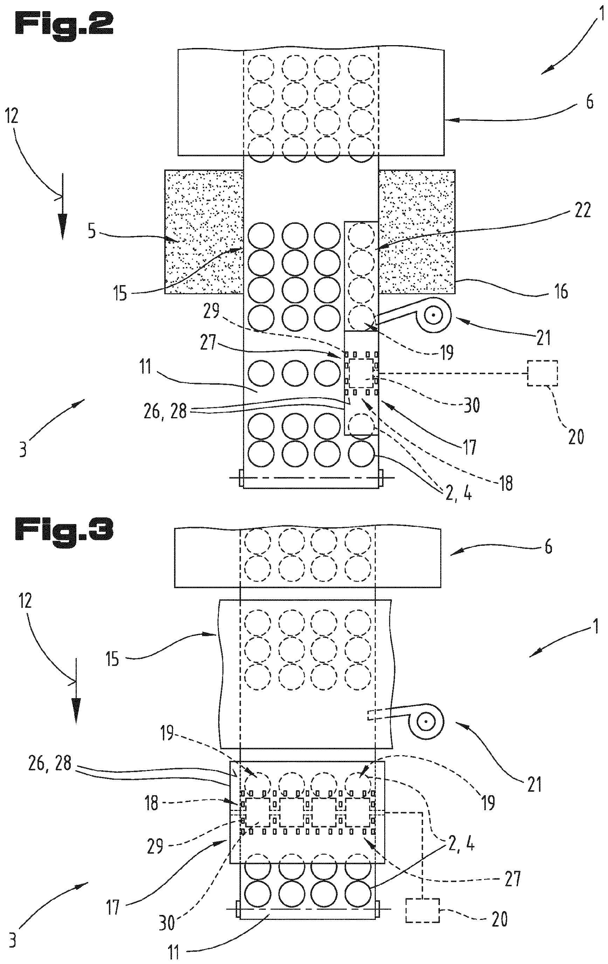

Generell gibt es mehrere Möglichkeiten zur Durchführung der Überwachung bzw. Qualitätsüberwachung der einen metallischen Werkstoff aufweisenden Objekte 2 nach deren Behandlung mit Behandlungsflüssigkeit 5. Eine Möglichkeit ist in der Fig. 2 dargestellt, in welcher Fig. 2 ausschnittsweise ein Ausführungsbeispiel einer Vorrichtung 1 zur Behandlung und Überwachung bzw. Qualitätsüberwachung von einen metallischen Werkstoff aufweisenden Objekten 2 dargestellt ist. Zur besseren Ersichtlichkeit ist hierbei die Vorrichtung 1 in Draufsicht von oben dargestellt. In der Fig. 2 werden für gleiche Teile gleiche Bezugszeichen bzw. Bauteilbezeichnungen wie in der vorangegangenen Fig. 1 verwendet. Um unnötige Wiederholungen zu vermeiden, wird auf die detaillierte Beschreibung in der vorangegangenen Fig. 1 hingewiesen bzw. Bezug genommen. In der Fig. 2 und auch in allen, folgenden Figuren werden zur besseren Ersichtlichkeit nur mehr einige der Objekte 2 bzw. Behältnisse 4 dargestellt. Selbstverständlich kann in der Realität vorgesehen sein, dass die Objekte 2 möglichst dicht gepackt in der Vorrichtung 1 angeordnet sind bzw. mit Behandlungsflüssigkeit 5 behandelt werden.

Wie aus der Fig. 2 ersichtlich ist, kann die farberfassende Erfassungsvorrichtung 18 in der Überwachungszone 17 derart angeordnet bzw. ausgerichtet sein, dass laufend bzw. fortwährend zumindest eine Teilmenge, bzw. laufend zumindest eines der behandelten Objekte 2 bzw. Behältnisse 4 durch optische Erfassung des wenigstens einen Teilabschnittes 19 überwacht werden kann. Bei dem dargestellten Ausführungsbeispiel kann zum Beispiel eine optische Erfassung wenigstens eines Teilabschnittes 19 von zumindest einem in einer in Transportrichtung 12 in einer seitlichen Reihe auf dem Transportmittel 11 angeordneten Objekte 2 bzw. Behältnisse 4 optisch erfasst werden. Selbstverständlich könnte die farberfassende Erfassungsvorrichtung 18 auch zur optischen Erfassung von jeweils zumindest einem Objekt 2 einer in Transportrichtung 12 in einer mittig an bzw. auf dem Transportmittel 11 angeordneten Reihe von mit Behandlungsflüssigkeit 5 behandelten Objekten 2 angeordnet sein. Alternativ zu dem in der Fig. 2 dargestellten Ausführungsbeispiel, wäre auch ein Abtrennen einer Teilmenge der behandelten Objekte 2 zur optischen Erfassung des wenigstens einen Teilabschnittes 19 möglich. Dies kann beispielsweise durch Umlenken einer Teilmenge der behandelten Objekte 2 mittels einer Umlenkvorrichtung, welche etwa durch ein Umleitelement, zum Beispiel ein Leitblech gebildet sein kann, und anschließender Hindurchführung durch eine Überwachungszone 17 bewerkstelligt werden.

Grundsätzlich ist auch eine optische Erfassung von jeweils zumindest einem behandelten Objekt 2 mehrerer in Transportrichtung 12 angeordneter Reihen von Objekten 2 möglich. Natürlich ist es auch denkbar, dass alle mit Behandlungsflüssigkeit 5 behandelten Objekte 2 mittels der farberfassenden Erfassungsvorrichtung 18 optisch erfasst werden. Hierzu kann die farberfassende Erfassungsvorrichtung 18 zum Beispiel ein Erfassungsmittel mit einem groß dimensionierten Erfassungsbereich, oder aber auch mehrere Erfassungsmittel aufweisen, wie dies in der Fig. 3 angedeutet ist. In der Fig. 3 werden wiederum für gleiche Teile gleiche Bezugszeichen bzw. Bauteilbezeichnungen wie in den vorangegangenen Fig. 1 und Fig. 2 verwendet. Um unnötige Wiederholungen zu vermeiden, wird auf die detaillierte Beschreibung in den vorangegangenen Fig. 1 und Fig. 2 hingewiesen bzw. Bezug genommen.

Generell kann auch vorgesehen sein, dass eine Erfassungsvorrichtung 18 an verschiedenen Stellen in der Überwachungszone 17 positionierbar ist, um jeweils unterschiedliche Teilabschnitte 19, aufweisend einen metallischen Werkstoff erfassen zu können.

Im Prinzip ist es sowohl bei dem in der Fig. 2 als auch bei dem in der Fig. 3 dargestellten Ausführungsbeispiel, bzw. ganz allgemein möglich, dass die farberfassende Erfassungsvorrichtung 18 zur optischen Erfassung jeweils zumindest eines der mit Behandlungsflüssigkeit 5 behandelten Objekte 2 bzw. Behältnisse 4 in festgelegten Zeitabständen ausgebildet ist. Eine optische Erfassung kann beispielsweise auch jeweils nach Behandlung einer bestimmten, festgelegten Anzahl an Objekten 2 mit Behandlungsflüssigkeit 5 durchgeführt werden.

Alternativ kann natürlich auch eine kontinuierliche, optische Erfassung zumindest einer Teilmenge der behandelten Objekte 2 durchgeführt werden. Im Besonderen kann bei dem in der Fig. 2 oder dem in der Fig. 3 dargestellten Ausführungsbeispiel eine Erfassungsfrequenz der jeweiligen farberfassenden Erfassungsvorrichtung 18 mit der Hindurchführfrequenz der Objekte 2 bzw. Behältnisse 4 durch die Überwachungszone 17 zeitlich gekoppelt sein. In diesem Zusammenhang kann natürlich auch vorgesehen sein, dass die Frequenz der farberkennungstechnischen Auswertung mit der Erfassungsfrequenz gekoppelt ist.

Des Weiteren kann vorgesehen sein, dass eine Beleuchtungshelligkeit der Beleuchtungsvorrichtung 27 für den wenigstens einen, optisch zu erfassenden Teilabschnitt 19, an eine Hindurchführungsgeschwindigkeit der optisch zu erfassenden Objekte 2 durch die Überwachungszone 17 angepasst wird. Dies vor allem, um eine jeweils ausreichende Belichtungshelligkeit für verschiedene, von der Hindurchführungsgeschwindigkeit abhängige, Belichtungszeiten für den jeweils wenigstens einen, optisch zu erfassenden Teilabschnitt 19 bereitstellen zu können. Eine Hindurchführungsgeschwindigkeit kann hierbei auch von der Hindurchführfrequenz der optisch zu erfassenden Objekte 2 durch die Überwachungszone 17 abhängig sein.

Bei dem in der Fig. 3 dargestellten Ausführungsbeispiel ist wiederum eine weitere Behandlungszone 15 zur Entfernung bzw. Abtrocknung der Behandlungsflüssigkeit 5 von den mit Behandlungsflüssigkeit 5 behandelten Objekten 2 dargestellt. Wie in der Fig. 3 dargestellt ist, können Behandlungsflüssigkeitsrückstände alternativ zu dem in der Fig. 1 gezeigten Ausführungsbeispiel für eine weitere Behandlungszone 15, auch aktiv von den behandelten Objekten 2 bzw. den Behältnissen 4 entfernt werden. In dem Ausführungsbeispiel gemäß Fig. 3 sind der weiteren Behandlungszone 15 hierzu beispielsweise Heißluftgebläse 21 zugeordnet, mittels welchen eine aktive bzw. unterstützt, beschleunigte Entfernung der Behandlungsflüssigkeit 5 von den behandelten Objekten 2 durchgeführt werden kann.

Zum Zwecke einer Vermeidung einer Beeinflussung der optischen Erfassung des wenigstens einen Teilabschnittes 19 bzw. der farberkennungstechnischen Auswertung des erfassten Teilabschnittes 19 durch Behandlungsflüssigkeit 5 bzw. Behandlungsflüssigkeitsrückstände, kann aber auch eine zusätzliche Zone 22 zur aktiven, möglichst raschen und vollständigen Entfernung von Behandlungsflüssigkeit 5 von den zur optischen Erfassung vorgesehen Objekte 2 ausgebildet sein, wie dies beispielsweise in der Fig. 2 dargestellt ist. Bei dem Ausführungsbeispiel gemäß Fig. 2 ist bezogen auf die Transportrichtung 12 für die Objekte 2 folgend auf die letztangeordnete Behandlungszone 6 zur Behandlung der Objekte 2 mit Behandlungsflüssigkeit 5, eine zusätzliche Zone 22 zur Entfernung von Behandlungsflüssigkeit 5 von dem jeweils zumindest einen, zur optischen Erfassung vorgesehenen Objekt 2 angeordnet. Dieser zusätzlichen Zone 22 kann zum Beispiel wiederum ein Heißluftgebläse 21, oder auch ein anderes Abtrocknungshilfsmittel zugeordnet sein. Bei dem Ausführungsbeispiel gemäß der Fig. 2, ist eine solche, zusätzliche Zone 22 in diesem Fall parallel zu der weiteren Behandlungszone 15 zur passiven Entfernung von Behandlungsflüssigkeit 5 der nicht zur optischen Erfassung vorgesehenen Objekte 2 bzw. Behältnisse 4 angeordnet. In der zusätzlichen Zone 22 zur aktiven Entfernung, kann die Behandlungsflüssigkeit 5 von dem jeweils zumindest einen, zur optischen Erfassung vorgesehenen Objekt 2 möglichst vollständig und rasch von Behandlungsflüssigkeit 5 befreit werden. Dies vergleichsweise schneller als in der weiteren Behandlungszone 15 zur passiven Trocknung der mit Behandlungsflüssigkeit 5 behandelten Objekte 2.

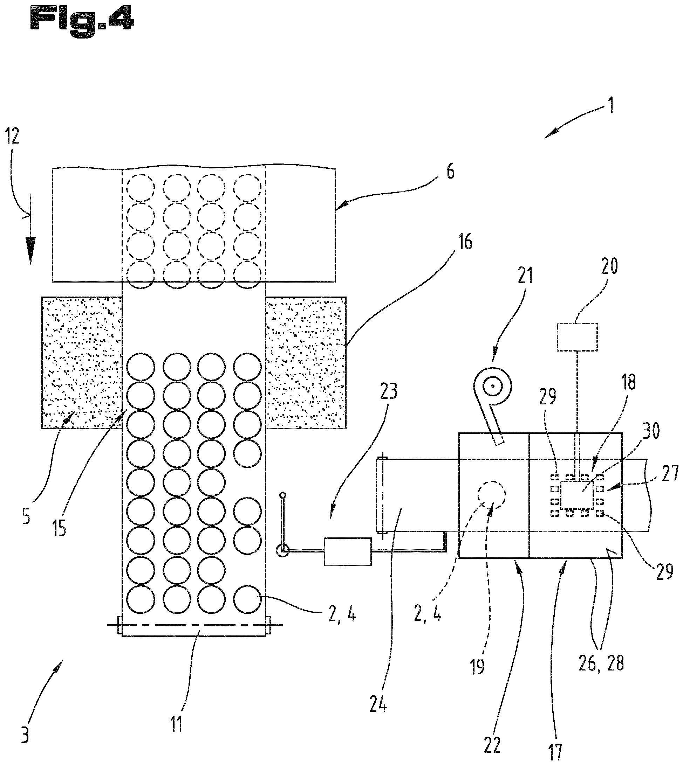

In der Fig. 4 ist eine weitere und gegebenenfalls für sich eigenständige Ausführungsform der Vorrichtung zur Behandlung von einen metallischen Werkstoff aufweisenden Objekten mit Behandlungsflüssigkeit gezeigt, wobei wiederum für gleiche Teile gleiche Bezugszeichen bzw. Bauteilbezeichnungen wie in den vorangegangenen Fig. 1 bis Fig. 3 verwendet werden. Um unnötige Wiederholungen zu vermeiden, wird auf die detaillierte Beschreibung in den vorangegangenen Fig. 1 bis Fig. 3 hingewiesen bzw. Bezug genommen.

Wie in der Fig. 4 dargestellt ist, kann im Prinzip eine Erfassung auch stichprobenartig durchgeführt werden. Beispielsweise kann vorgesehen sein, dass zu bestimmten Zeitpunkten ein mit Behandlungsflüssigkeit 5 behandeltes Objekt 2 bzw. Behältnis 4 zwecks optischer Erfassung des wenigstens einen, einen metallischen Werkstoff aufweisenden Teilabschnittes 19 etwa von dem Transportmittel 11 genommen wird, und einer baulich separat angeordneten Überwachungszone 17 zugeführt wird, wie dies in der Fig. 4 veranschaulicht ist. Eine Stichprobenahme kann hierbei grundsätzlich manuell, also händisch zum Beispiel durch eine Bedienperson vorgenommen werden, wobei ein jeweils, optisch zu erfassendes Objekt 2 zum Beispiel von dem Fördermittel 11 genommen, durch Abwischen getrocknet, und sodann in eine Überwachungszone hineingestellt werden kann. Wie in der Fig. 4 dargestellt, kann eine solche Entnahme aber natürlich auch maschinell, insbesondere automatisiert erfolgen, beispielsweise mittels einem Entnahmemechanismus 23. Ein solcher Entnahmemechanismus 23 kann beispielsweise einen mechanischen Greifer, ein saugnapfartiges Unterdruckgreifelement, oder eine andere Greifvorrichtung zum Ergreifen bzw. Entnehmen des jeweils zumindest einen, zur optischen Erfassung vorgesehenen Objektes 2 bzw. Behältnisses 4, umfassen. Alternativ hierzu kann eine Entnahme einzelner behandelter Objekte 2 zur optischen Erfassung des wenigstens einen Teilabschnittes 19, mittels einer schwenkbaren Umlenkvorrichtung, etwa mittels eines Umleitelements bzw. Leitblechs, und anschließender Hindurchführung der abgetrennten bzw. umgelenkten Objekte 2 durch die Überwachungszone 17 bewerkstelligt werden.

Bei dem in der Fig. 4 dargestellten Ausführungsbeispiel ist eine weitere Transportvorrichtung 24 zur Hindurchführung des jeweils zumindest einen, zur optischen Erfassung vorgesehenen Objektes 2 durch die baulich separat angeordnete Überwachungszone 17 ausgebildet. Des Weiteren ist bei der beispielhaft, ausschnittsweise dargestellten Vorrichtung 1 bzw. Pasteurisierungsanlage 3 wiederum vorgesehen, dass das jeweils eine, zur optischen Erfassung vorgesehene Objekt 2 vor Hindurchführung durch die Überwachungszone 17, mittels der weiteren Transportvorrichtung 24 auch durch eine zusätzliche Zone 22 zur Entfernung der Behandlungsflüssigkeit 5 bzw. zur Entfernung von Behandlungsflüssigkeitsrückständen von dem jeweils zumindest einen, zur optischen Erfassung vorgesehenen Objekt 2 hindurchgeführt wird.

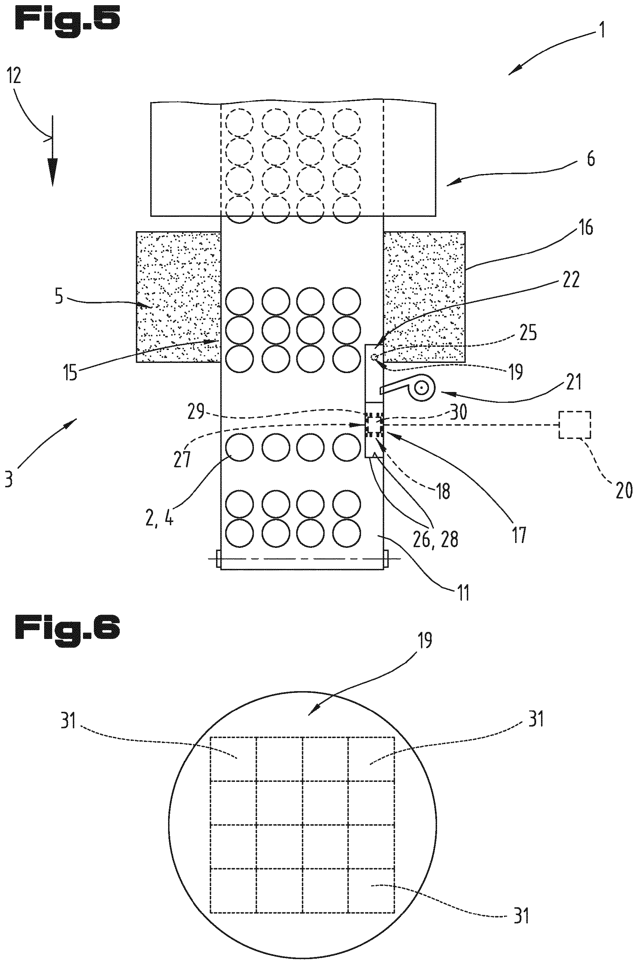

In der Fig. 5 ist eine weitere und gegebenenfalls für sich eigenständige Ausführungsform der Vorrichtung zur Behandlung von einen metallischen Werkstoff aufweisenden Objekten mit Behandlungsflüssigkeit gezeigt, wobei wiederum für gleiche Teile gleiche Bezugszeichen bzw. Bauteilbezeichnungen wie in den vorangegangenen Fig. 1 bis Fig. 4 verwendet werden. Um unnötige Wiederholungen zu vermeiden, wird auf die detaillierte Beschreibung in den vorangegangenen Fig. 1 bis Fig. 4 hingewiesen bzw. Bezug genommen.

In der Figur 5 ist ein Ausführungsbeispiel für eine Vorrichtung 1 dargestellt, bei welcher an dem Transportmittel 11 ein Testobjekt 25 angeordnet ist, wobei die farberfassende Erfassungsvorrichtung 18 in der Überwachungszone 17 zur optischen Erfassung wenigstens eines einen metallischen Werkstoff aufweisenden Teilabschnittes 19 dieses Testobjektes 25 angeordnet ist. Ein solches Testobjekt 25 kann hierbei beispielsweise platzsparend in einer Randzone des Transportmittels 11 angeordnet sein. Des Weiteren kann ein solches Testobjekt 25 im Verhältnis zu den übrigen behandelten Objekten 2 klein dimensioniert sein. Dies bringt wiederum Vorteile hinsichtlich der erforderlichen Dimensionierung der Überwachungszone 17, welche in solchen Fällen ebenfalls mit vergleichsweise kleinen Dimensionen ausgeführt sein kann.

Bei dem in der Fig. 5 dargestellten Ausführungsbeispiel, wird das Testobjekt 25 gemeinsam mit den zu behandelnden Objekten 2 mit Behandlungsflüssigkeit behandelt. Hierzu kann das Testobjekt 25 gemeinsam mit den zu behandelnden Objekten 2 durch die Behandlungszone(n) 6 hindurchgeführt werden. Nach der Behandlung mit Behandlungsflüssigkeit 5 kann ein einen metallischen Werkstoff aufweisender Teilabschnitt 19 des Testobjekt 25 mittels der farberfassenden Erfassungsvorrichtung 18 optisch erfasst werden.

Ein solches Testobjekt 25 kann beispielsweise einem besonders verfärbungsempfindlichen Teilabschnitt der zu behandelnden Objekte 2 nachgebildet bzw. nachempfunden sein. Zum Beispiel kann im Falle der als Beispiel für eine Vorrichtung 1 zur Behandlung von dosenförmig ausgestalteten Aluminiumbehältnissen 4 dargestellten Pasteurisierungsanlage 3, das Testobjekt 25 durch eine Verschlusslasche bzw. den sogenannten Stay-On-Tab der Aluminiumbehältnisse 4 gebildet sein. Diese Verschluss- bzw. Öffhungslaschen von Aluminiumbehältnissen 4 haben sich als besonders empfindlich gegenüber einer Verfärbung bzw. Brunnenwasserschwärzung im Zuge einer Behandlung zur Pasteurisierung erwiesen.

Wie in den Fig. 1 bis 5 weiters dargestellt ist, kann vorzugsweise eine jeweilige Überwachungszone 17 Mittel 26 zur Abschottung bzw. Abschattung gegenüber einem Umgebungslicht aufweisen, und eine Beleuchtungsvorrichtung 27, insbesondere eine LED-Beleuchtungsvorrichtung, zur Beleuchtung des wenigstens einen Teilabschnitts 19 des jeweils zumindest einen Objekts 2 mit Weißlicht umfassen. Auf diese Weise kann in einer Überwachungszone 17 ein Erfassungsbereich der farberfassenden Erfassungsvorrichtung 18 gegenüber einem jeweils vorherrschenden Umgebungslicht zumindest weitestgehend abgeschottet bzw. abgeschattet werden, und der wenigstens eine, optisch zu erfassende Teilabschnitt 19 des jeweils zumindest einen Objekts 2 mittels der Beleuchtungsvorrichtung 27, insbesondere LED-Beleuchtungsvorrichtung, mit Weißlicht beleuchtet werden.

Durch diese Merkmale bzw. Maßnahmen können für die optische Erfassung des wenigstens einen, einen metallischen Werkstoff aufweisenden Teilabschnittes 19 des jeweils zumindest einen, zur optischen Erfassung vorgesehenen Objektes 2 möglichst einheitliche und reproduzierbare Erfassungsbedingungen bereitgestellt werden. Die Mittel 26 zur Abschottung bzw. Abschattung gegenüber dem jeweiligen Umgebungslicht können zum Beispiel durch lichtundurchlässige, wandartige Umgrenzungs- bzw. Abschattungselemente 28 für die Überwachungszone 17 gebildet sein, sodass etwa eine tunnelartige oder von den Abschattungselementen dachartig umgegebene Überwachungszone 17 ausgestaltet ist, wie dies in den Fig. 1 bis Fig. 4 veranschaulicht ist.

Die Weißlicht-Beleuchtungsvorrichtung 27 kann eine oder mehrere Lichtquellen 29, vorzugsweise LED-Lichtquellen aufweisen. Die Anzahl und Anordnung der LED-Lichtquellen 29 in der Überwachungszone 17 können hierbei derart gewählt sein, dass der wenigstens eine, zu erfassende Teilabschnitt 19 des jeweils zumindest einen, zur Erfassung vorgesehenen Objektes 2 bzw. Behältnisses 4, möglichst ausreichend und gleichmäßig mit Weißlicht ausgeleuchtet bzw. beleuchtet ist.

Wie außerdem in den Fig. 1 bis Fig. 5 angedeutet ist, kann die farberfassende Erfassungsvorrichtung 18 ein bildgebendes bzw. farbbilderfassendes Erfassungsmittel 30, insbesondere eine Farbbildkamera aufweisen. Dadurch kann im Betrieb der Vorrichtung 1 der wenigstens eine Teilabschnitt 19 des jeweils zumindest einen zu erfassenden Objekts 2 mittels eines bildgebenden Erfassungsmittels 30, insbesondere eine Farbbildkamera optisch erfasst bzw. abgebildet werden.

Durch die Erfassung eines Farbabbildes können im Besonderen die Optionen für die farberkennungstechnische Auswertung durch die Auswertevorrichtung 20 erweitert werden. In diesem Zusammenhang kann zum Beispiel vorgesehen sein, dass das optisch erfasste Abbild des wenigstens einen Teilabschnitts 19 in Teilbilder 31 aufgeteilt wird, und jedes Teilbild 31 separat farberkennungstechnisch ausgewertet wird, wie dies in der Fig. 6 schematisch veranschaulicht ist. Auf diese Weise können Verfärbungen in dem wenigstens einen, erfassten Teilabschnitt 19 bereichsweise bzw. bildabschnittsweise aufgelöst analysiert werden. Hierdurch können zum Beispiel Stellen bzw. Bereiche mit maximaler Verfärbung identifiziert werden.

Die Auswertevorrichtung 20 kann grundsätzlich baulich separiert von der Erfassungsvorrichtung 18 angeordnet sein, wie dies in den Fig. 1 bis 5 auch jeweils schematisch veranschaulicht ist. Zur Übertragung der optisch erfassten Daten an die Auswertevorrichtung 20 kann im Prinzip jedwedes Datenübertragungsmittel eingesetzt werden. Vorzugsweise kann eine kabelgebundene oder kabellose Signalverbindung 32 zwischen der farberfassenden Erfassungsvorrichtung 18 und der Auswertevorrichtung 20 vorgesehen sein, wie dies in den Fig. 1 bis Fig. 5 veranschaulich ist. Die Auswertevorrichtung 20 selbst kann beispielsweise durch eine softwaresteuerbare Recheneinheit, etwa einen PC oder ein Tablet gebildet sein. Grundsätzlich kann aber auch vorgesehen sein, dass die Auswertevorrichtung 20 baulich als integrierter Bestandteil der Erfassungsvorrichtung 18 ausgebildet ist, beispielsweise Farbsensoren mit integrierter, auf einem Farbmodell basierender Auswertevorrichtung 20.

Die farberkennungstechnische Auswertung mittels der Auswertevorrichtung 20 kann vorzugsweise derart durchgeführt werden, dass der wenigstens eine, optisch erfasste Teilabschnitt 19 des jeweils zumindest einen Objekts 2 farberkennungstechnisch im L*a*b*-Farbraum ausgewertet wird, und dass der L*-Farbkennwert und/oder der a*-Farbkennwert und/oder der b*-Farbkennwert farberkennungstechnisch gebildet bzw. auswertetechnisch ermittelt wird.

Der L*a*b*-Farbraum stellt ein Farbmodell für die farberkennungstechnische Auswertung bereit, welches geräteunabhängig und der menschlichen Wahrnehmung möglichst nahekommend definiert ist. Dadurch können etwaige Verfärbungen von metallischen Werkstoffen auch hinsichtlich einer menschlichen Empfindung für die Verfärbungen möglichst gut ausgewertet werden.

Es kann vorgesehen sein, dass bei dem in den Fig. 1 bis Fig. 5 dargestellten Pasteurisierungsanlagen 3, als einen Aluminiumwerkstoff aufweisende Behältnisse 4 ausgestaltete, und mit Lebensmittel befüllte Objekte 2 durch Behandlung der Objekte mit temperierte, wässriger Behandlungsflüssigkeit 5 pasteurisiert werden. Bei derartigen Behandlungen bzw. Prozessen von Aluminium aufweisenden Objekten 2 mit wässriger Behandlungsflüssigkeit 5, tritt zum Beispiel häufig eine sogenannte Brunnenwasserschwärzung des Aluminiumwerkstoffes auf. Häufig sind diese als Brunnenwasserschwärze bekannten Verfärbungen von Aluminiumwerkstoffen jedoch schwer erfassbar bzw. auswertbar. In solchen Fällen kann vorgesehen sein, dass farberkennungstechnisch der b*-Farbkennwert gebildet bzw. numerisch ermittelt wird. Der b*-Farbkennwert ist besonders gut geeignet für eine farberkennungstechnische Auswertung der Brunnenwasserschwärze. Insbesondere hat sich herausgestellt, dass die bräunliche bis schwarze Verfärbung durch Brunnenwasserschwärzung farberkennungstechnisch gut durch Bildung des b*-Farbkennwertes auswertbar ist. Im Besonderen ist bei Brunnenwasserschwärze eine deutliche Erhöhung des b*-Farbkennwertes hin zu höheren, positiven Werten im Vergleich zu einem unbehandelten Aluminiumwerkstoff bzw. einer blanken Aluminiumoberfläche, feststellbar bzw. auswertbar. Alternativ und/oder zusätzlich kann bei Vorliegen bzw. bei einer optisch erfassten Brunnenwasserschwärze des wenigstens einen, optische erfassten Teilabschnittes 19, auch eine farberkennungstechnische Auswertung unter Bildung des L*-Farbkennwertes, welcher die Helligkeit bzw. Luminanz einer jeweiligen Farbe definiert, durchgeführt werden.

Unabhängig von der genauen Durchführung einer farberkennungstechnischen Auswertung, kann vorgesehen sein, dass jeweils ein Grenzwert für den oder die farberkennungstechnisch gebildeten Farbkennwert(e) festgelegt wird, und dass der oder die Farbkennwert(e) mit dem jeweils zugeordneten Grenzwert verglichen werden. Hierdurch kann grundsätzlich für jeden farberkennungstechnisch bzw. auswertungstechnisch gebildeten Farbkennwert ein jeweils zugehöriger Grenzwert festgelegt werden. Durch Vergleich eines Farbkennwertes mit dem jeweils zugehörigen Grenzwert kann sodann ein Ausmaß einer Verfärbung effizient erkannt und beurteilt, bzw. numerisch, rechnerisch analysiert werden.

Im Prinzip können im Zuge der farberkennungstechnischen Auswertung gebildete Farbkennwerte durch eine Person, zum Beispiel durch eine Bedienperson für die Vorrichtung 1, begutachtet und evaluiert, und/oder zum Beispiel mit einem jeweiligen Grenzwert verglichen werden. Im Sinne einer effizienten Automatisierung von Behandlungsverfahren kann es jedoch auch vorteilhaft sein, wenn diese Prozesse, also beispielsweise ein Vergleichen eines farberkennungstechnisch gebildeten Farbkennwertes mit einem festgelegten bzw. hinterlegten Grenzwert für den entsprechenden Farbkennwert, steuerungstechnisch automatisiert erfolgt.

Ein Grenzwert bzw. Grenzwerte für Farbkennwerte kann bzw. können zum Beispiel in der Auswertevorrichtung 20 selbst datentechnisch hinterlegt werden bzw. sein. Es kann jedoch auch vorgesehen sein, dass die Auswertevorrichtung 20 mit einer Steuerungsvorrichtung 33 signalverbunden ist, wie dies schematisch in der fig. 1 veranschaulicht ist. Grenzwert(e) können dann auch in der Steuerungsvorrichtung 33 datentechnisch hinterlegt sein.

In diesem Zusammenhang kann aber auch vorgesehen sein, dass bei einer Überschreitung eines festgelegten Grenzwertes durch einen diesem Grenzwert zugeordneten Farbkennwert, eine Maßnahme durchgeführt wird oder mehrere Maßnahmen durchgeführt werden. Beispielsweise kann es zweckmäßig sein, dass als Maßnahme ein Alarm ausgelöst wird. Grundsätzlich bzw. in Abhängigkeit einem jeweiligen Behandlungsverfahren, kann zum Beispiel auch ein Stoppen der Durchführung des Verfahrens, beispielsweise ein Anhalten des Transportmittels 11 und/oder ein Stoppen der Zuführung von Behandlungsflüssigkeit in die Behandlungszone(n), ausgelöst werden. Eine Maßnahme kann hierbei im Prinzip wiederum manuell durch Bedienpersonal der Vorrichtung eingeleitet werden.

Vorzugsweise kann eine Maßnahme, beispielsweise ein Alarm oder ein Behandlungsstopp, aber auch automatisiert bzw. steuerungstechnisch ausgelöst werden, beispielsweise durch eine Steuerungsvorrichtung 33, wie in der Fig. 1 veranschaulicht ist.

Bei dem in der Fig. 1 anhand einer Pasteurisierungsanlage 3 dargestellten Ausführungsbeispiel einer Vorrichtung 1, kann zum Beispiel vorgesehen sein, dass als Maßnahme eine Änderung der chemischen Zusammensetzung der Behandlungsflüssigkeit 5 vorgenommen wird. Im Besonderen auch zur Vermeidung von Brunnenwasserschwärzungen von einen Aluminiumwerkstoff aufweisenden Objekten 2 bzw. Behältnissen 4, kann zum Beispiel vorgesehen sein, dass eine Anpassung des pH-Wertes der wässrigen Behandlungsflüssigkeit 5 und/oder eine Zugabe von Inhibitoren, insbesondere von Phosphonaten in die Behandlungsflüssigkeit 5 und/oder eine Zugabe von Wasserhärteregulatoren in die Behandlungsflüssigkeit 5 durchgeführt wird.

Wie in der Fig. 1 dargestellt ist, kann zur steuerungstechnisch automatisierten Durchführung solcher Maßnahmen, die Steuerungsvorrichtung 33 mit entsprechend geeigneten, ansteuerbaren Mitteln, wie zum Beispiel die in der Fig. 1 schematisch veranschaulichten Ventile 34 und/oder Pumpen 35 steuerungstechnisch signalverbunden sein. Auf diese Weise können durch steuerungstechnisches Öffnen der Ventile 34 und/oder steuerungstechnische Inbetriebsetzung der Pumpen 35, der Behandlungsflüssigkeit entsprechende Chemikalien beispielsweise aus Chemikalienreservoirs 36 zudosiert bzw. zugeführt werden. Die in der Fig. 1 dargestellten Chemikalienreservoirs 36 können dementsprechend zum Beispiel Säuren und/oder Basen und/oder Inhibitoren und/oder Härteregulatoren, und/oder weitere Chemikalien beinhalten.

Im Falle einer wiederholten Verwendung der Behandlungsflüssigkeit 5 zur Behandlung der Objekte 2, kann auch vorgesehen sein, dass als Maßnahme die Behandlungsflüssigkeit 5 teilweise oder auch zur Gänze ausgetauscht, also zumindest teilweise durch frische Behandlungsflüssigkeit 5 ersetzt wird. Diese Maßnahme ist besonders vorteilhaft bei Verfahren, bei welchen die Behandlungsflüssigkeit 5 der oder den Behandlungszone(n) 6 im Umlaufkreislaufverfahren wiederholt zugeführt wird.

Alternativ oder zusätzlich kann aber auch vorgesehen sein, dass als Maßnahme eine Hindurchführungsgeschwindigkeit der Objekte 2 durch die Behandlungszone(n) geändert wird, oder die Hindurchführung gestoppt wird. Schließlich kann es zur Vermeidung von Verfärbungen durch Behandlung von einen metallischen Werkstoff aufweisenden Objekten mit einer Behandlungsflüssigkeit auch sinnvoll sein, dass als Maßnahme eine Zufuhrtemperatur einer in eine Behandlungszone 6 eingeleiteten Behandlungsflüssigkeit 5 geändert wird.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Vorrichtung | 31 | Teilbild |
| 2 | Objekt | 32 | Signalverbindung |
| 3 | Pasteurisierungsanlage | 33 | Steuerungsvorrichtung |
| 4 | Behältnis | 34 | Ventil |
| 5 | Behandlungsflüssigkeit | 35 | Pumpe |
| 6 | Behandlungszone | 36 | Chemikalienreservoir |
| 7 | Zuführmittel | | |
| 8 | Rohrleitung | | |
| 9 | Verteilungsmittel | | |
| 10 | Außenseite | | |
| 11 | Transportmittel | | |
| 12 | Transportrichtung | | |
| 13 | Heizmittel | | |
| 14 | Kühlmittel | | |
| 15 | B ehandlungszone | | |
| 16 | Auffangbehälter | | |
| 17 | Überwachungszone | | |
| 18 | Erfassungsvorrichtung | | |
| 19 | Teilabschnitt | | |
| 20 | Auswertevorrichtung | | |
| 21 | Heißluftgebläse | | |
| 22 | Zone | | |
| 23 | Entnahmemechanismus | | |
| 24 | Transportvorrichtung | | |
| 25 | Testobjekt | | |
| 26 | Mittel | | |
| 27 | Beleuchtungsvorrichtung | | |
| 28 | Abschattungselement | | |
| 29 | Lichtquelle | | |
| 30 | Erfassungsmittel | | |

## Patentansprüche

1. Verfahren zur Behandlung und Überwachung von einen metallischen Werkstoff aufweisenden Objekten (2), umfassend
Behandlung der einen metallischen Werkstoff aufweisenden Objekte (2) mit einer wässrigen Behandlungsflüssigkeit (5), in einer Behandlungszone (6) oder in mehreren Behandlungszonen (6),
wobei in wenigstens einer Behandlungszone (6) eine jeweilige Außenseite (10) der Objekte (2) mit einer temperierten Behandlungsflüssigkeit (5) behandelt wird, die Objekte (2) durch Behältnisse (4) gebildet sind, und wobei die Behältnisse (4) vor der Behandlung mit Behandlungsflüssigkeit mit einem Inhalt, insbesondere mit einem Lebensmittel befüllt, und verschlossen werden und das Lebensmittel in der wenigstens einen Behandlungszone (6) pasteurisiert wird,
nach dem Behandeln der Objekte (2) mit Behandlungsflüssigkeit (5), Entfernen oder Abtrocknung der Behandlungsflüssigkeit (5) von den behandelten Objekten (2),
**dadurch gekennzeichnet, dass**
zur laufenden Überwachung nach der Behandlung der Objekte (2) wenigstens ein, einen metallischen Werkstoff aufweisender Teilabschnitt (19) von jeweils zumindest einem behandelten Objekt (2) mittels einer farberfassenden Erfassungsvorrichtung (18) optisch erfasst wird,
und die optisch erfassten Daten des wenigstens einen Teilabschnitts (19) mittels einer Auswertevorrichtung (20) farberkennungstechnisch unter Bildung eines Farbkennwertes eines Farbraumes oder mehrerer Farbkennwerte eines Farbraumes ausgewertet werden.

2. Verfahren nach Anspruch 1, **dadurch gekennzeichnet, dass** die Objekte (2) mittels einem Transportmittel (11) in einer Transportrichtung (12) durch eine oder mehrere aufeinanderfolgende Behandlungszone/n (6, 15) hindurchgeführt werden, und nach Hindurchführung durch die in Transportrichtung (12) letztangeordnete der aufeinanderfolgenden Behandlungszonen (6, 15) der wenigstens eine Teilabschnitt (19) des jeweils zumindest einen Objektes (2) optisch erfasst wird.

3. Verfahren nach Anspruch 1 oder 2, **dadurch gekennzeichnet, dass** das zumindest eine Objekt (2) durch eine Überwachungszone (17), umfassend die farberfassende Erfassungsvorrichtung (18), hindurchgeführt wird.

4. Verfahren nach einem der vorhergehenden Ansprüche, **dadurch gekennzeichnet, dass** Objekte (2) aufweisend einen Aluminiumwerkstoff mit wässriger Behandlungsflüssigkeit behandelt werden, und dass wenigstens ein einen Aluminiumwerkstoff aufweisender Teilabschnitt (19) des jeweils zumindest einen Objektes (2) optisch erfasst wird.

5. Verfahren nach einem der vorhergehenden Ansprüche, **dadurch gekennzeichnet, dass** die Objekte (2) in wenigstens einer Behandlungszone (6) mit einer Behandlungsflüssigkeit (5) aufweisend eine Temperatur zwischen 45 °C und 130 °C behandelt werden.

6. Verfahren nach einem der vorhergehenden Ansprüche, **dadurch gekennzeichnet, dass** die Behandlungsflüssigkeit (5) von dem jeweils zumindest einen Objekt (2) vor der optischen Erfassung des wenigstens einen Teilabschnitt es (19) entfernt wird.

7. Verfahren nach einem der vorhergehenden Ansprüche, **dadurch gekennzeichnet, dass** in einer Überwachungszone (17) ein Erfassungsbereich der farberfassenden Erfassungsvorrichtung (18) gegenüber einem Umgebungslicht zumindest weitestgehend abgeschattet wird, und der wenigstens eine, optisch zu erfassende Teilabschnitt (19) des jeweils zumindest einen Objekts (2) mittels einer Beleuchtungsvorrichtung (27), insbesondere mittels einer LED-Beleuchtungsvorrichtung, mit Weißlicht beleuchtet wird.

8. Verfahren nach Anspruch 7, **dadurch gekennzeichnet, dass** eine Beleuchtungshelligkeit der Beleuchtungsvorrichtung (27) für den wenigstens einen, optisch zu erfassenden Teilabschnitt (19), an eine Hindurchführungsgeschwindigkeit der optisch zu erfassenden Objekte (2) durch die Überwachungszone (17) angepasst wird.

9. Verfahren nach einem der vorhergehenden Ansprüche, **dadurch gekennzeichnet, dass** jeweils ein Grenzwert für den oder die farberkennungstechnisch gebildeten Farbkennwert/e festgelegt wird, und dass der oder die Farbkennwert/e mit dem jeweils zugeordneten Grenzwert verglichen werden.

10. Verfahren nach Anspruch 9, **dadurch gekennzeichnet, dass** bei einer Überschreitung eines festgelegten Grenzwertes durch einen diesem Grenzwert zugeordneten Farbkennwert, eine Maßnahme durchgeführt wird oder mehrere Maßnahmen durchgeführt werden.

11. Verfahren nach Anspruch 10, **dadurch gekennzeichnet, dass** als Maßnahme ein Alarm ausgelöst wird.

12. Verfahren nach einem der Ansprüche 10 oder 11, **dadurch gekennzeichnet, dass** als Maßnahme eine Änderung der chemischen Zusammensetzung der Behandlungsflüssigkeit (5) vorgenommen wird.

13. Verfahren nach Anspruch 12, **dadurch gekennzeichnet, dass** als Maßnahme eine Anpassung des pH-Wertes der Behandlungsflüssigkeit (5) und/oder eine Zugabe von Inhibitoren, insbesondere von Phosphonaten in die Behandlungsflüssigkeit (5) und/oder eine Zugabe von Wasserhärteregulatoren in die Behandlungsflüssigkeit (5) durchgeführt wird.

14. Verfahren einem der Ansprüche 10 bis 15, **dadurch gekennzeichnet, dass** als Maßnahme eine Hindurchführungsgeschwindigkeit der Objekte (2) durch die Behandlungszone/n geändert wird, oder die Hindurchführung gestoppt wird.

15. Verfahren nach einem der Ansprüche 10 bis 16, **dadurch gekennzeichnet, dass** als Maßnahme eine Zufuhrtemperatur einer in eine Behandlungszone (6) eingeleiteten Behandlungsflüssigkeit (5) geändert wird.

16. Verfahren nach einem der vorhergehenden Ansprüche, **dadurch gekennzeichnet, dass** der wenigstens eine, optisch erfasste Teilabschnitt (19) des jeweils zumindest einen Objekts (2) farberkennungstechnisch im L*a*b*-Farbraum ausgewertet wird, und dass der L*-Farbkennwert und/oder der a*-Farbkennwert und/oder der b*-Farbkennwert farberkennungstechnisch gebildet wird.

17. Verfahren nach einem der vorhergehenden Ansprüche, **dadurch gekennzeichnet, dass** der wenigstens eine Teilabschnitt (19) des jeweils zumindest einen Objekts (2) mittels eines bildgebenden Erfassungsmittels (30), insbesondere eine Farbbildkamera optisch erfasst wird.

18. Verfahren nach Anspruch 17, **dadurch gekennzeichnet, dass** das optisch erfasste Abbild des wenigstens einen Teilabschnitts (19) in Teilbilder (31) aufgeteilt wird, und jedes Teilbild (31) separat farberkennungstechnisch ausgewertet wird.

19. Verfahren nach einem der vorhergehenden Ansprüche, **dadurch gekennzeichnet, dass** ein Testobjekt (25) gemeinsam mit den zu behandelnden Objekten (2) mit Behandlungsflüssigkeit behandelt wird, wobei ein einen metallischen Werkstoff aufweisender Teilabschnitt (19) des Testobjekt (25), nach der Behandlung mittels der farberfassenden Erfassungsvorrichtung (18) optisch erfasst wird.

20. Verfahren nach Anspruch 19, **dadurch gekennzeichnet, dass** das Testobjekt (25) gemeinsam mit den zu behandelnden Objekten (2) durch die Behandlungszone/n (6) hindurchgeführt wird.

21. Pasteurisierungsanlage (3) zur Behandlung und Überwachung von einen metallischen Werkstoff, insbesondere einen Aluminiumwerkstoff aufweisenden Objekten (2), umfassend,
eine Behandlungszone (6) oder mehrere Behandlungszonen (6) zur Behandlung der Objekte (2), welche Behandlungszone/n (6) ein Zuführmittel (7) zur Zuführung einer Behandlungsflüssigkeit (5) aufweist/aufweisen,
wobei die Pasteurisierungsanlage (3) ein Heizmittel (13) zum Erwärmen der Behandlungsflüssigkeit (5), und ein Kühlmittel (14) zum Abkühlen der Behandlungsflüssigkeit (5) umfasst, und dass wenigstens eine erste Behandlungszone (6) zum Erwärmen der Objekte (2) angeordnet ist, und bezogen auf eine Transportrichtung 12) für die Objekte (2) folgend auf die erste Behandlungszone (6) wenigstens eine zweite Behandlungszone (6) zum weiteren Erhitzen der Objekte (6) angeordnet ist, und bezogen auf die Transportrichtung (12) für die Objekte (2) folgend auf die zweite Behandlungszone (6) wenigstens eine dritte Behandlungszone (6) zum Abkühlen der Objekte (2) angeordnet ist
**dadurch gekennzeichnet, dass**
eine Überwachungszone (17) ausgebildet ist, in welcher Überwachungszone (17) zur laufenden Überwachung der Objekte (2) eine farbefassende Erfassungsvorrichtung (18) zur optischen Erfassung wenigstens eines, einen metallischen Werkstoff aufweisenden Teilabschnittes (19) von jeweils zumindest einem mit Behandlungsflüssigkeit behandelten Objekt (2) angeordnet ist,
wobei die farberfassende Erfassungsvorrichtung (18) zur datentechnischen Bereitstellung der optisch erfassten Daten des wenigstens einen Teilabschnittes (19) mit einer Auswertevorrichtung (20) signalverbunden ist,
und wobei die Auswertevorrichtung (20) zur farberkennungstechnischen Auswertung der bereitgestellten Daten unter Bildung eines Farbkennwertes eines Farbraumes oder mehrerer Farbkennwerte eines Farbraumes ausgebildet ist.

22. Pasteurisierungsanlage nach Anspruch 21, **dadurch gekennzeichnet, dass** eine weitere Behandlungszone (15) zur Entfernung oder Abtrocknung der Behandlungsflüssigkeit (5) von den Objekten (2) angeordnet ist.

23. Pasteurisierungsanlage nach Anspruch 21 oder 22, **dadurch gekennzeichnet, dass** sie ein Transportmittel (11) zur Hindurchführung der Objekte (2) durch die Behandlungszone (6) oder mehrere aufeinanderfolgende Behandlungszonen (6, 15) aufweist.

24. Pasteurisierungsanlage nach Anspruch 23, **dadurch gekennzeichnet, dass** das Transportmittel (11) oder eine weitere Transportvorrichtung (24) zur Hindurchführung des jeweils zumindest einen Objektes (2) durch die Überwachungszone (17) ausgebildet ist.

25. Pasteurisierungsanlage nach Anspruch 23 oder 24, **dadurch gekennzeichnet, dass** die Überwachungszone (17) bezogen auf eine Transportrichtung (12) für die Objekte (2), folgend auf die letztangeordnete Behandlungszone (6, 15) angeordnet ist.

26. Pasteurisierungsanlage nach einem der Ansprüche 23 bis 25, **dadurch gekennzeichnet, dass** bezogen auf eine Transportrichtung (12) für die Objekte (2) folgend auf die letztangeordnete Behandlungszone (6) zur Behandlung der Objekte (2) mit Behandlungsflüssigkeit (5) eine zusätzliche Zone (22) zur Entfernung von Behandlungsflüssigkeit (5) von dem jeweils zumindest einen, zur optischen Erfassung vorgesehenen Objekt (2) angeordnet ist.

27. Pasteurisierungsanlage nach einem der Ansprüche 21 bis 26, **dadurch gekennzeichnet, dass** die Überwachungszone (17) Mittel (26) zur Abschattung gegenüber einem Umgebungslicht aufweist, und eine Beleuchtungsvorrichtung (27), insbesondere eine LED-Beleuchtungsvorrichtung, zur Beleuchtung des wenigstens einen Teilabschnitts (19) des jeweils zumindest einen Objekts (2) mit Weißlicht umfasst.

28. Pasteurisierungsanlage nach einem der Ansprüche 21 bis 27, **dadurch gekennzeichnet, dass** die farberfassende Erfassungsvorrichtung (18) ein bildgebendes Erfassungsmittel (30), insbesondere eine Farbbildkamera aufweist.

29. Pasteurisierungsanlage nach einem der Ansprüche 22 bis 28, **dadurch gekennzeichnet, dass** an dem Transportmittel (11) ein Testobjekt (25) angeordnet ist, und dass die farberfassende Erfassungsvorrichtung (18) in der Überwachungszone (17) zur optischen Erfassung wenigstens eines einen metallischen Werkstoff aufweisenden Teilabschnittes (19) des Testobjektes (25) angeordnet ist.

## Claims

1. A method for treating and monitoring objects (2) incorporating a metal material, comprising
treatment of the objects (2) incorporating a metal material with an aqueous treatment liquid (5), in a treatment zone (6) or in multiple treatment zones (6),
wherein in at least one treatment zone (6), a respective external face (10) of the objects (2) is treated with a tempered treatment liquid (5), the objects (2) are formed by containers (4), and wherein the containers (4) are filled with contents, in particular with a foodstuff, and closed prior to the treatment with treatment liquid, and the foodstuff is pasteurized in the at least one treatment zone (6),
after treating the objects (2) with treatment liquid (5), removing or drying the treatment liquid (5) from the objects (2) treated,
**characterized in that**
for constant monitoring after treating the objects (2), at least one portion (19) incorporating a metal material of at least one treated object (2), in each case, is optically detected by means of a color-detecting detection device (18),
and the optically detected data of the at least one portion (19) is colorimetrically evaluated by means of an evaluation device (20) by determining one color value of a color space or multiple color values of a color space.

2. The method according to claim 1, **characterized in that** the objects (2) are conveyed by means of a conveyor means (11) in a transport direction (12) through one or multiple consecutive treatment zone(s) (6, 15), and having been conveyed through the last one of the consecutive treatment zones (6, 15) in the transport direction (12), the at least one portion (19) of the respective at least one object (2) is optically detected.

3. The method according to claim 1 or 2, **characterized in that** the at least one object (2) is conveyed through a control zone (17) comprising the color-detecting detection device (18).

4. The method according to one of the preceding claims, **characterized in that** objects (2) incorporating an aluminum material are treated with aqueous treatment liquid, and that at least one portion (19) incorporating aluminum material of the respective at least one object (2) is optically detected.

5. The method according to one of the preceding claims, **characterized in that** the objects (2) are treated with a treatment liquid (5) having a temperature of between 45 °C and 130 °C in at least one treatment zone (6).

6. The method according to one of the preceding claims, **characterized in that** the treatment liquid (5) is removed from the respective at least one object (2) prior to optical detection of the at least one portion (19).

7. The method according to one of the preceding claims, **characterized in that** in a control zone (17), a detection area of the color-detecting detection device (18) is screened off from ambient light at least mostly, and the at least one portion (19) of the respective at least one object (2) to be optically detected is illuminated with white light by means of an illuminating device (27), in particular by means of an LED illuminating device.

8. The method according to claim 7, **characterized in that** an illuminating brightness of the illuminating device (27) for the at least one portion to be optically detected (19) is adapted to a conveying speed of the object (2) to be optically detected through the control zone (17).

9. The method according to one of the preceding claims, **characterized in that** a threshold value is set in each case for the colorimetrically determined color value(s) and the color value(s) is/are compared with the respective, associated threshold value.

10. The method according to claim 9, **characterized in that** if a set threshold value is exceeded by a color value associated with this threshold value, an action is implemented, or multiple actions are implemented.

11. The method according to claim 10, **characterized in that** the action is triggering an alarm.

12. The method according to one of claims 10 or 11, **characterized in that** the action implemented is a change to the chemical composition of the treatment liquid (5).

13. The method according to claim 12, **characterized in that** the action is to adjust the pH value of the treatment liquid (5) and/or add inhibitors, in particular phosphonates, to the treatment liquid (5) and/or add water hardness regulators to the treatment liquid (5).

14. The method according to one of claims 10 to 15, **characterized in that** the action is to vary a conveying speed of the objects (2) through the treatment zone(s) or to halt conveying.

15. The method according to one of claims 10 to 16, **characterized in that** the action is to vary an intake temperature of a treatment liquid (5) fed into a treatment zone (6).

16. The method according to one of the preceding claims, **characterized in that** the at least one optically detected portion (19) of the respective at least one object (2) is colorimetrically evaluated in the L*a*b* color space, and the L* color value and/or a* color value and/or b* color value is colorimetrically determined.

17. The method according to one of the preceding claims, **characterized in that** the at least one portion (19) of the respective at least one object (2) is optically detected by means of an imaging detection means (30), in particular a color camera.

18. The method according to claim 17, **characterized in that** the optically detected image of the at least one portion (19) is broken down into part-images (31) and each part-image (31) is colorimetrically evaluated separately.

19. The method according to one of the preceding claims, **characterized in that** a test object (25) is treated with treatment liquid together with the objects (2) to be treated, wherein a portion (19) of the test object (25) incorporating metal material is optically detected by means of the color-detecting detection device (18) after the treatment.

20. The method according to claim 19, **characterized in that** the test object (25) is conveyed through the treatment zone(s) (6) together with the objects (2) to be treated.

21. A pasteurizing plant (3) for treating and monitoring objects (2) incorporating a metal material, in particular an aluminum material, comprising
a treatment zone (6) or multiple treatment zones (6) for treating the objects (2), which treatment zone(s) (6) has/have an intake means (7) for delivering a treatment liquid (5), wherein the pasteurizing plant (3) comprises a heating means (13) for heating the treatment liquid (5) and a cooling means (14) for cooling the treatment liquid (5), and that at least a first treatment zone (6) is provided for heating the objects (2), and following the first treatment zone (6) relative to a transport direction (12) of the objects (2) at least a second treatment zone (6) for additionally heating the objects (2) is provided, and following the second treatment zone (6) relative to the transport direction (12) of the objects (2) at least a third treatment zone (6) is provided for cooling the objects (2),
**characterized in that**
a control zone (17) is provided, in which control zone (17) a color-detecting detection device (18) for optically detecting at least one portion (19) incorporating a metal material of at least one object treated with treatment liquid (2) in each case is provided as a means for constantly monitoring the objects (2),
wherein the color-detecting detection device (18) is connected to an evaluation device (20) by signal transmission to enable data processing of the optically detected data of the at least one portion (19),
and wherein the evaluation device (20) is configured to colorimetrically evaluate the provided data by determining one color value of a color space or multiple color values of a color space.

22. The pasteurizing plant according to claim 21, **characterized in that** a further treatment zone (15) is provided for removing or drying the treatment liquid (5) from the objects (2).

23. The pasteurizing plant according to claim 21 or 22, **characterized in that** it comprises a conveyor means (11) for conveying the objects (2) through the treatment zone (6) or multiple consecutive treatment zones (6, 15).

24. The pasteurizing plant according to claim 23, **characterized in that** the conveyor means (11) or another conveyor device (24) is configured to convey the respective at least one object (2) through the control zone (17).

25. The pasteurizing plant according to claim 23 or 24, **characterized in that** the control zone (17) is disposed following the last treatment zone (6, 15) relative to a transport direction (12) of the objects (2).

26. The pasteurizing plant according to one of claims 23 to 25, **characterized in that** following the last treatment zone (6) for treating the objects (2) with treatment liquid (5), relative to a transport direction (12) of the objects (2), an additional zone (22) is provided for removing treatment liquid (5) from the respective at least one object (2) to be optically detected.

27. The pasteurizing plant according to one of claims 21 to 26, **characterized in that** the control zone (17) comprises means (26) for screening off ambient light and an illuminating device (27), in particular an LED-illuminating device, for illuminating the at least one portion (19) of respective the at least one object (2) with white light.

28. The pasteurizing plant according to one of claims 21 to 27, **characterized in that** the color-detecting detection device (18) comprises an imaging detection means (30), in particular a color camera.

29. The pasteurizing plant according to one of claims 22 to 28, **characterized in that** a test object (25) is disposed on the conveyor means (11) and that the color-detecting detection device (18) for optically detecting at least one portion incorporating a metal material (19) of the test object (25) is disposed in the control zone (17).

## Revendications

1. Procédé pour le traitement et la surveillance d'objets (2) comprenant un matériau métallique, comprenant
le traitement des objets (2) comprenant un matériau métallique avec un liquide de traitement aqueux (5), dans une zone de traitement (6) ou dans plusieurs zones de traitement (6),
dans lequel, dans au moins une zone de traitement (6), un côté externe (10) respectif des objets (2) est traité avec un liquide de traitement tempéré (5), les objets (2) sont constitués de récipients (4) et dans lequel les récipients (4) sont remplis, avant le traitement avec le liquide de traitement, avec un contenu, plus particulièrement avec un produit alimentaire et scellés et le produit alimentaire est pasteurisé dans l'au moins une zone de traitement (6),
après le traitement des objets (2) avec un liquide de traitement (5), élimination ou séchage du liquide de traitement (5) des objets (2) traités,
**caractérisé en ce que**
pour la surveillance en continu après le traitement des objets (2), au moins une partie (19), comprenant un matériau métallique, d'au moins un objet traité (2) est détectée optiquement au moyen d'un dispositif de détection (18) détectant les couleurs,
et les données détectées optiquement de l'au moins une partie (19) sont analysées au moyen d'un dispositif d'analyse (20) avec une reconnaissance de couleurs en formant une valeur caractéristique colorimétriques d'un espace colorimétrique ou de plusieurs valeurs caractéristiques colorimétriques d'un espace colorimétrique.

2. Procédé selon la revendication 1, **caractérisé en ce que** les objets (2) sont guidés à l'aide d'un moyen de transport (11) dans une direction de transport (12) à l'aide d'une ou plusieurs zones de traitement (6, 15) successives et, après le guidage à travers la dernière, dans la direction de transport (12), des zones de traitement (6, 15) successives, l'au moins une partie (19) de l'au moins un objet (2) est détectée optiquement.

3. Procédé selon la revendication 1 ou 2, **caractérisé en ce que** l'au moins un objet (2) est guidé à travers une zone de surveillance (17) comprenant le dispositif de détection (18) détectant les couleurs.

4. Procédé selon l'une des revendications précédentes, **caractérisé en ce que** les objets (2) comprenant un matériau à base d'aluminium avec un liquide de traitement aqueux et **en ce qu'**au moins une partie (19), comprenant un matériau à base d'aluminium, de l'au moins un objet (2) est détectée optiquement.

5. Procédé selon l'une des revendications précédentes, **caractérisé en ce que** les objets (2) sont traités dans au moins une zone de traitement (6) avec un liquide de traitement (5) présentant une température entre 45 °C et 130 °C.

6. Procédé selon l'une des revendications précédentes, **caractérisé en ce que** le liquide de traitement (5) est éliminé de l'au moins un objet (2) avant la détection optique de l'au moins une partie (19).

7. Procédé selon l'une des revendications précédentes, **caractérisé en ce que**, dans une zone de surveillance (17), une zone de détection du dispositif de détection (18) détectant les couleurs est occultée au moins en grande partie par rapport à une lumière ambiante et l'au moins une partie (19) à détecter optiquement de l'au moins un objet (2) est éclairée avec une lumière blanche au moyen d'un dispositif d'éclairage (27), plus particulièrement au moyen d'un dispositif d'éclairage à LED.

8. Procédé selon la revendication 7, **caractérisé en ce qu'**une luminosité d'éclairage du dispositif d'éclairage (27) pour l'au moins une partie (19) à détecter optiquement est adaptée à une vitesse de guidage des objets (2) à détecter optiquement à travers la zone de surveillance (17).

9. Procédé selon l'une des revendications précédentes, **caractérisé en ce qu'**une valeur limite pour la ou les valeurs caractéristiques colorimétriques formée par détection de couleurs est déterminée et **en ce que** la ou les valeurs caractéristiques colorimétriques sont comparées avec la valeur limite correspondante.

10. Procédé selon la revendication 9, **caractérisé en ce que**, lors d'un dépassement d'une valeur limite déterminée par une valeur caractéristique colorimétrique correspondant à cette valeur limite, une mesure est appliquée ou plusieurs mesures sont appliquées.

11. Procédé selon la revendication 10, **caractérisé en ce que**, en tant que mesure, une alarme est déclenchée.

12. Procédé selon la revendication 10 ou 11, **caractérisé en ce que**, en tant que mesure, une modification de la composition chimique du liquide de traitement (5) est effectuée.

13. Procédé selon la revendication 12, **caractérisé en ce que**, en tant que mesure, une adaptation de la valeur de pH du liquide de traitement (5) et/ou un ajout d'inhibiteurs, plus particulièrement de phosphonates, dans le liquide de traitement (5) et/ou un ajout de régulateurs de dureté de l'eau dans le liquide de traitement (5) est effectué.

14. Procédé selon l'une des revendications 10 à 15, **caractérisé en ce que**, en tant que mesure, une vitesse de guidage des objets (2) à travers la ou les zones de traitement est modifiée ou le guidage est arrêté.

15. Procédé selon l'une des revendications 10 à 16, **caractérisé en ce que**, en tant que mesure, une température d'alimentation d'un liquide de traitement (5) introduit dans une zone de traitement (6) est modifiée.

16. Procédé selon l'une des revendications précédentes, **caractérisé en ce que** l'au moins une partie (19) détectée optiquement de l'au moins un objet (2) est analysée par détection de couleur dans l'espace colorimétrique L*a*b* et **en ce que** la valeur caractéristique colorimétrique L* et/ou la valeur caractéristique colorimétrique a* et/ou la valeur caractéristique colorimétrique b* est formée par détection de couleur.

17. Procédé selon l'une des revendications précédentes, **caractérisé en ce que** l'au moins une partie (19) de l'au moins un objet (2) est détectée optiquement à l'aide d'un moyen de détection à imagerie (30), plus particulièrement une caméra couleur.

18. Procédé selon la revendication 17, **caractérisé en ce que** la représentation détectée optiquement de l'au moins une partie (19) est divisée en images partielles (31) et chaque image partielle (31) est analysée séparément par détection de couleurs.

19. Procédé selon l'une des revendications précédentes, **caractérisé en ce qu'**un objet de test (25) est traité conjointement, avec les objets (2) à traiter, avec un liquide de traitement, dans lequel une partie (19), comprenant un matériau métallique, de l'objet de test (25), est détectée optiquement après le traitement au moyen du dispositif de détection (18) détectant les couleurs.

20. Procédé selon la revendication 19, **caractérisé en ce que** l'objet de test (25) est guidé, conjointement avec les objets (2) à traiter, à travers la ou les zones de traitement (6).

21. Installation de pasteurisation (3) pour le traitement et la surveillance d'un objet (2) comprenant un matériau métallique, comprenant
une zone de traitement (6) ou plusieurs zones de traitement (6) pour le traitement des objets (2), cette ou ces zones de traitement (6) comprenant un moyen d'alimentation (7) pour l'alimentation d'un liquide de traitement (5),
dans lequel l'installation de pasteurisation (3) comprend un moyen de chauffage (13) pour le chauffage du liquide de traitement (5), et un moyen de refroidissement (14) pour le refroidissement du liquide de traitement (5),
et en ce qu'au moins une première zone de traitement (6) pour le chauffage des objets (2) est disposée et, à la suite de la première zone de traitement (6), dans une direction de transport (12) pour les objets (2), est disposée au moins une deuxième zone de traitement (6) pour le chauffage supplémentaire des objets (6) et, à la suite de la deuxième zone de traitement (6), dans une direction de transport (12) pour les objets (2), est disposée au moins une troisième zone de traitement (6) pour le refroidissement des objets (2),
**caractérisée en ce que**
une zone de surveillance (17) est réalisée, un dispositif de détection (18) détectant les couleurs étant disposée dans cette zone de surveillance (17) pour la surveillance en continu des objets (2), pour la détection optique d'au moins une partie (19) comprenant un matériau métallique d'au moins un objet (2) traité avec un liquide de traitement, dans lequel le dispositif de détection (18) détectant les couleurs est relié par signaux, pour la mise à disposition des données relevées optiquement de l'au moins une partie (19), avec un dispositif d'analyse (20),
et dans lequel le dispositif d'analyse (20) est conçu pour l'analyse par détection de couleurs des données mises à disposition en formant une valeur caractéristique colorimétrique d'un espace colorimétrique ou de plusieurs valeurs caractéristiques colorimétriques d'un espace colorimétrique.

22. Installation de pasteurisation selon la revendication 21, **caractérisée en ce qu'**une autre zone de traitement (15) et disposée pour l'élimination ou le séchage du liquide de traitement (5) des objets (2).

23. Installation de pasteurisation selon la revendication 21 ou 22, **caractérisée en ce qu'**elle comprend un moyen de transport (11) pour le guidage des objets (2) à travers la zone de traitement (6) ou plusieurs zones de traitement (6, 15) successives.

24. Installation de pasteurisation selon la revendication 23, **caractérisée en ce que** le moyen de transport (11) ou un autre dispositif de transport (24) est conçu pour le guidage de l'au moins un objet (2) à travers la zone de surveillance (17).

25. Installation de pasteurisation selon la revendication 23 ou 24, **caractérisée en ce que** la zone de surveillance (17) est disposée, dans une direction de transport (12) pour les objets (2), à la suite de la dernière zone de traitement (6, 15).

26. Installation de pasteurisation selon l'une des revendications 23 à 25, **caractérisée en ce que**, dans une direction de transport (12) pour les objets (2), à la suite de la dernière zone de traitement (6) pour le traitement des objets (2) avec un liquide de traitement (5), une zone supplémentaire (22) est disposée pour l'élimination du liquide de traitement (5) de l'au moins un objet (2) prévu pour la détection optique.

27. Installation de pasteurisation selon l'une des revendications 21 à 26, **caractérisée en ce que** la zone de surveillance (17) comprend des moyens (26) pour l'occultation par rapport à une lumière ambiante et un dispositif d'éclairage (27), plus particulièrement un dispositif d'éclairage à LED, pour l'éclairage de l'au moins une partie (19) de l'au moins un objet (2) avec une lumière blanche.

28. Installation de pasteurisation selon l'une des revendications 21 à 27, **caractérisée en ce que** le dispositif de détection (18) détectant les couleurs comprend un moyen de détection à imagerie (30), plus particulièrement une caméra couleur.

29. Installation de pasteurisation selon l'une des revendications 22 à 28, **caractérisée en ce que**, sur le moyen de transport (11) est disposé un objet de test (25) et **en ce que** le dispositif de détection (18) détectant les couleurs est disposé dans la zone de surveillance (17) pour la détection optique d'au moins une partie (19), comprenant un matériau métallique, de l'objet de test (25).
